# EUROPÄISCHE PATENTSCHRIFT

(11) **EP 0 249 023 B1**
(45) Veröffentlichungstag und Bekanntmachung des Hinweises auf die Patenterteilung: **03.11.1993**
(21) Anmeldenummer: 87106289.9
(22) Anmeldetag: 30.04.1987
(51) Int. Cl.: B01D 45/16, B01D 53/24, B01D 17/038, B04C 5/13

(54) **Wirbelkammerabscheider**
Swirl chamber separator
Séparateur à chambre de tourbillonnement

(30) Priorität: 09.05.1986 DE 3615747
(43) Veröffentlichungstag der Anmeldung: 16.12.1987
(60) Teilanmeldung: 91120013.7
(73) Patentinhaber: Bielefeldt, Ernst-August, Dipl.-Ing., 24582 Bordesholm (DE)
(72) Erfinder: Bielefeldt, Ernst-August, Dipl.-Ing., 24582 Bordesholm (DE)
(74) Vertreter: Schmidt-Bogatzky, Jürgen, Dr. Ing. Huth, Dietrich & Partner

(56) Entgegenhaltungen:
- DE-A- 2 160 415
- DE-A- 2 206 318
- DE-A- 2 538 664
- DE-A- 2 832 097
- DE-A- 3 203 498
- US-A- 3 535 850

## Beschreibung

Die Erfindung betrifft ein Verfahren zum Trennen und/oder Abscheiden von festen und/oder flüssigen Partikeln (disperse Phase) aus gasförmigen und/oder flüssigen Medien (kontinuierliche Phase) sowie zum Trennen von gemischten Gasen (Gas-Gas-Trennung) und/oder gemischten Flüssigkeiten (Flüssig-Flüssig-Trennung) sowie zum Sichten und/oder Klassieren mit einem Wirbelkammerabscheider, in dem ein Fliehkraftfeld erzeugt wird, aus dem der spezifisch leichtere Anteil durch zwei in den Wirbelkammerabscheider koaxial und spiegelbildlich zu deren Mittelebenen hineinragende Tauchrohre innerhalb des Zentralbereichs des Wirbelkammerabscheiders abgesaugt wird und die Ausbildung von Wirbelkammerabscheidern zur Durchführung des Verfahrens mit mindestens einer Wirbelkammer mit einer scharfen Abströmkante am Eingang des Hauptströmungskanals in die Wirbelkammer und jeweils zwei Tauchrohren, die koaxial zueinander und parallel zur Abströmkante in der Wirbelkammer angeordnet sind, sich jeweils von deren Endwänden aufeinander zuerstrekken und mit einem Reingasauslaß in Verbindung stehen und einen sich erweiternden Auslauf aufweisen.

Das Wirbeltrennverfahren als strömungsmechanisches Trennverfahren, bei dem Zentrifugalkräfte zum Trennen oder Abscheiden einer schweren dispersen Phase von einer leichteren, kontinuierlichen, strömungsfähigen Trägerphase aus Aero- und/oder Hydrodispersionen genutzt werden, ist an sich bekannt. In der DE-A 32 03 498 wird z. B. ein gattungsgemäßer Wirbelkammerabscheider beschrieben. Dieser hat jedoch wie auch andere bekannt gewordene Wirbelkammerabscheider den Nachteil, daß aufgrund von Strömungsverlusten in dem Wirbelkammerabscheider dessen Abtrennleistung bezogen auf den Energieeinsatz relativ gering ist und die zur Steigerung der Abtrennleistung häufig erforderlichen Mehrkammeranordnungen ein relativ großes Bauvolumen haben. Hierdurch ist der Einsatzbereich der bekannten Wirbelkammerabscheider begrenzt.

Nach der US-A-35 35 850 ist ein weiterer Wirbelkammerabscheider bekannt, bei dem der Luftstrom senkrecht zur Mittelachse des Tauchrohrs in das Gehäuse eingeführt, dann um 90° (ohne Berücksichtigung von Strömungsablenkungen durch Wirbelbildungen) umgelenkt in das Gehäuse eintritt, in dem er vor dessen Mitte erneut um 180° umgelenkt und dann in das zugehörige Tauchrohr geführt wird. Bei diesem Wirbelkammerabscheider besteht der Nachteil, daß durch Wirbelbildungen Strömungsablenkungen auftreten, die zu erheblichen Strömungsverlusten und damit einer Verminderung der Abtrennleistung führen.

Die Aufgabe der Erfindung besteht darin, das Verfahren zum Betrieb von Wirbelkammerabscheidern der eingangs genannten Art so zu verbessern, daß bei Verminderung der Strömungsverluste die Abtrennleistung der Wirbelkammer verbessert wird, und einen Wirbelkammerabscheider so auszubilden, daß bei Mehrkammeranordnungen bei gesteigerter Abtrennleistung eine Verringerung des Bauvolumens erzielt wird.

Erfindungsgemäß erfolgt die Lösung der Aufgabe bezüglich des Verfahrens dadurch, daß zur Verringerung der Strömungsverluste bei der Drehimpulseinleitung die Kontaktzone zwischen der Kauptströmung und dem Wirbel so zur festen Zylindermantelbegrenzung eingestellt wird, daß der tangentiale Eintrittsimpuls in die Bodenschichtströmung durch Verkleinerung des in der Wirbelkammer sekundär zirkulierenden Impulsanteils der Bodenschichtströmung vergrößert wird, daß die Bodenschichtströmung rotationssymmetrisch bei konstanter oder annähernd konstanter mittlerer Hauptströmungsgeschwindigkeit ausgebildet wird, daß die Wandschichtströmung des Wirbels in der Wirbelkammer und der Hauptströmung im Hauptströmungskanal der Abströmkante so konkav gekrümmt zugeführt wird, daß die senkrechten Sekundärgeschwindigkeiten beidseitig der Abströmkante gleichsinnig gerichtet und örtlich gleich groß sind, daß der Reingasstrom durch die Tauchrohre so geführt wird, daß die Zonen höchster Strömungsgeschwindigkeit die Strömung nur mit schwachen Meridianflußumlenkungen belastet und daß der Reingasstrom an der Außenwand der Tauchrohre mit zu den Einlaßabschnitten steigender Geschwindigkeit geführt wird, wobei in den Tauchrohren eine Ringströmung erzeugt wird, die in der Austrittszone des Tauchrohrs nach Umlenkung durch Leitschaufeln in eine Quellströmung mit geringer Strömungsgeschwindigkeit am Austritt umgewandelt wird.

Der Wirbelkammerabscheider nach der Erfindung ist so ausgebildet, daß der Mantel des Hauptströmungskanals spiralig gekrümmt ist und die der Abströmkante vom Hauptströmungskanal zugeführte Wand eine konkave Zylinderform aufweist, daß der Rohgaseintritt tangential zum Hauptströmungskanalbogen an der äußeren Gehäusewand der Wirbelkammer ausgebildet ist, und daß die Tauchrohre einen sich kontinuierlich erweiternden Querschnitt aufweisen und in deren Austrittsbereich über den Umfang verteilt Umlenkschaufeln angeordnet sind, mittels derer die umfangs- und meridianmäßig verzögerte Tauchrohrinnenströmung entdrallbar ist.

Vorteilhafte Ausgestaltungen der Erfindung werden in den abhängigen Ansprüchen beschrieben und anhand der in den Zeichnungen dargestellten Ausführungsbeispiele näher erläutert. Es Zeigt
- Fig. 1: einen Wirbelkammerabscheider in einer aufgebrochenen perspektivischen Darstellung im Schnitt,
- Fig. 2: einen Wirbelkammerabscheider in einer Seitenansicht im Schnitt A-A nach Fig. 3.,
- Fig. 3: einen Wirbelkammerabscheider in einer schematischen Draufsicht im Schnitt,
- Fig. 4 bis 15: schematische Darstellungen von Wirbelkammerabscheidern in der Draufsicht und Seitenansicht im Schnitt,
- Fig. 16 und 17: die Ausbildung von Abströmkanten in einer perspektivischen Ansicht und einer Draufsicht,
- Fig. 18 bis 23: die Ausbildung weiterer Wirbelkammerabscheider in verschiedenen schematischen Ansichten,
- Fig. 24 bis 46: die Ausbildung von Mehrkammeranordnungen von Wirbelkammerabscheidern in verschiedenen Ansichten

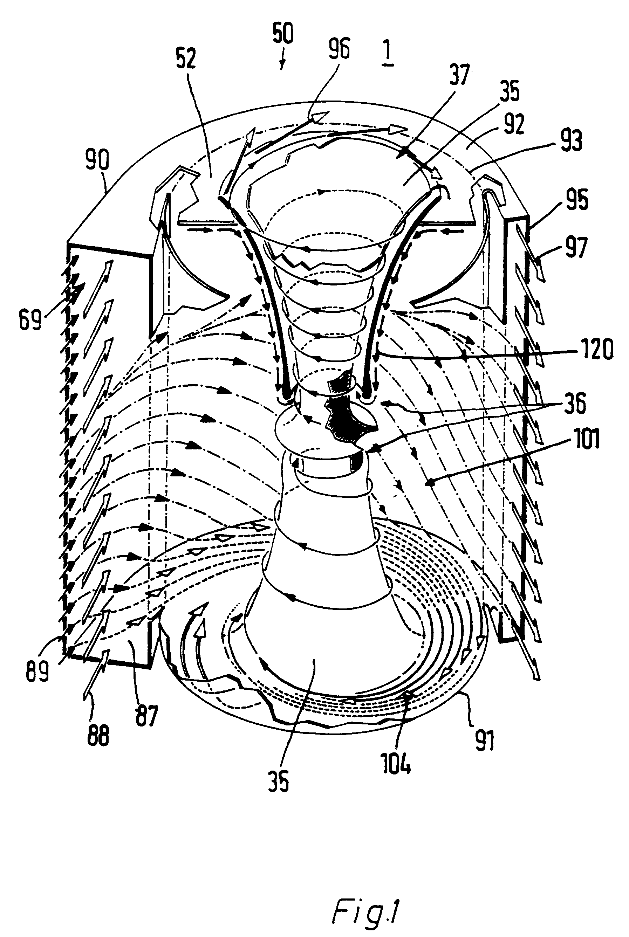

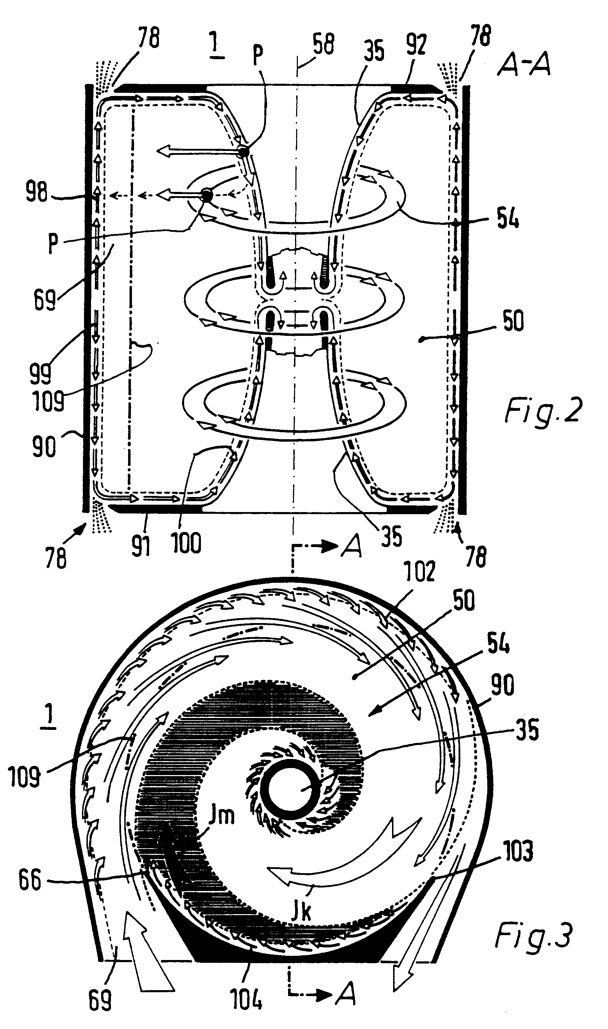

Fig. 1 zeigt in einer aufgebrochenen perspektivischen Ansicht einen Wirbelkammerabscheider 1, bei dem der Rohgasvolumenstrom 88 durch einen Rohgaseintritt 87 in das Abscheidergehäuse 52 eingeführt wird. Das Rohgasvolumen wird in dem Wirbelkammerabscheider 1 in bekannter Weise in einen Reingasvolumenstrom 96 und einen Restrohgasvolumenstrom 97 aufgeteilt. Der Restrohgasvolumenstrom 97 tritt durch den Restrohgasaustritt 95 aus dem Abscheidergehäuse 52 aus. Der Reingasvolumenstrom 96 wird durch zwei Tauchrohre 35 im Bereich des oberen Wirbelkammerbodens 92 und des unteren Wirbelkammerbodens 91 aus dem Abscheidergehäuse 52 herausgeführt. Die Tauchrohre 35 weisen einen sich vom Eintrittsabschnitt 36 zum Austrittsabschnitt 37 erweiternden Querschnitt auf und sind trompetenförmig ausgebildet. Die sich hierdurch in dem Abscheidergehäuse 52 ergebenden Strömungen sind durch Pfeillinien angedeutet. An dem Hauptströmungskanalbogen 90 bildet sich eine Sekundärströmung 89 aus. Auf den Wirbelkammerböden 91, 91 ist jeweils eine Sekundärströmung 104 vorhanden. Eine weitere räumliche quergerichtete Sekundärströmung ist mit dem Bezugszeichen 101 angedeutet. An der Außenwandung der Tauchrohre 35 strömt eine weitere Sekundärströmung 120 als Meridiananteil. Quer zur Mittelachse der Tauchrohre 35 bildet sich ein Wirbel 54 aus, der in Fig. 2 dargestellt ist. Im Bereich des Hauptströmungskanalbogens 90 bildet sich eine aus Meridiankomponenten bestehende Wandschichtströmung 99 aus. Gleichzeitig befindet sich an dem Hauptströmungskanalbogen 90 die Grobabtrennzone 98, wobei die hier ausgeschiedenen Feststoffe durch in den Wirbelkammerböden, 91, 92 ausgebildete Austragsspalte 78 abgeführt werden. Am Übergang von den Wirbelkammerböden 90, 91 zu den Tauchrohren 35 ist jeweils eine Feinabtrennzone 100 ausgebildet.

Gegenüber zylindrischen Tauchrohren zeichnen sich Tauchrohre 35 wie die in Fig. 1 dargestellten trompetenartigen Tauchrohre 35 durch verschiedene Vorteile aus. Die sanftere Strömungsführung bei der Umlenkung des Meridianflusses führt zu geringeren radialen Drehimpulsverlusten und zu einer Verbesserung der Abtrennleistungen der Wirbelkammer 50 im Vergleich zu Wirbelkammern mit zylindrischen Tauchrohren. Bei Ausbildung der Tauchrohre 35 mit einer progressiv zunehmenden Wandkrümmung in Axialebenen vom Eintrittsabschnitt zum Austrittsabschnitt erfolgt eine weitere Reduktion der örtlichen Drehimpulsverluste, wobei in den Zonen höchster Strömungsgeschwindigkeiten die Strömung zusätzlich nur noch mit schwachen Meridianflußumlenkungen belastet wird. Ferner reduzieren die Tauchrohre 35 mit veränderlichen Querschnitt den volumetrischen Bereich des dissipativ wirkenden Wirbelströmungsfeldes. Die Wandströmung hat daher nur ein kleineres Wirbelvolumen anzutreiben. Hierdurch reduzieren sich dissipative Druckverlustanteile der Strömung. Dies hat zur Folge, daß von dem Ausgangsdrehimpuls, der sich aus einer im wesentlichen geraden Strömung bei nahezu tangentialem peripheren Eintritt in die kreisende Strömung entwickelt, mehr Impulsanteile zur Beschleunigung der Wandströmung freigegeben werden. Hierdurch erfolgt eine weitere Verbesserung der Abtrennleistung der Wirbelkammer 50. Die Volumenreduktion des Wirbelströmungsfeldes führt zu kürzeren Partikeltransportwegen für die in der Feinabtrennzone 100 abgetrennten Partikel P in Axialebenen durch das Feld des Wirbels 54. Hierdurch können diese Partikel P schneller aus der Wirbelkammer 50 abgeführt werden, wodurch der Trennprozeß vereinfacht wird. Die radiale Sekundärströmung 104 auf den Wirbelkammerböden 91, 92 wirkt wegen der kleinen einwärtsgerichten Verschiebungskräfte ebenfalls aufkonzentrierend. Dieses entsteht dadurch, daß die Partikel P an dem Hauptströmungskanalbogen 90 des Hauptströmungskanals 69 etwa mit der dort vorhandenen Kontinuumsgeschwindigkeit bewegt werden und dadurch in die Zone des Bodensenkenflusses mit höherer Geschwindigkeit hineinströmen als sie dort selbst bewegt werden. Die bei zylindrischer Tauchrohren vorhandene Erhöhung der örtlichen Drehimpulsverluste im Bodensenkenfluß wird bei den Tauchrohren 35 durch die Vergrößerung des Tauchrohrdurchmessers im Bereich der Wirbelkammerböden 91, 92 vermindert. Ursächlich hierfür ist die radiale Verkleinerung der ebenen Drehimpulstransportzone im Bereich der Wirbelkammerböden 91, 92 mit gleichzeitiger Beschränkung auf äußere Radienbereiche mit schwächeren Querschnittsminderungseinflüssen. Im Ergebnis wird hiermit die für den Drehimpuls nachteilige Aufkonzentration reduziert. Die Flächen der Wirbelkammerböden 91, 92 bilden ferner abtrennunwirksame Zonen für die Sekundärströmung, da in dieser die Verschiebungskräfte für die Partikel P mit dem Meridianfluß radial- und gleichgerichtet sind. Die Verkleinerung der abtrennungswirksamen Bodenflächen durch die Tauchrohre 35 mit veränderlichem Querschnitt erhöht somit die Trennwirksamkeit der Wirbelkammer 50. Gleichzeitig wird durch die Tauchrohre 35 mit veränderlichem Querschnitt eine Vergrößerung der hochtrennwirksamen Feinabtrennzone 100 erzielt. Die Abtrennwirkung beginnt am ebenen Meridianströmungsende dort, wo die Wandprofilkrümmung der Tauchrohre 35 einsetzt. In der Feinabtrennzone 100 herrscht Querstromtrennung vor, die sehr schnell einsetzt und sich dann mit ortsabhängig abnehmendem Tauchrohrdurchmesser erheblich verstärkt. Je größer die Verlängerung der Feinabtrennzone durch die Tauchrohre 35 veränderlichen Querschnitts ist, um so mehr und um so schneller können Partikel P im Verlauf des schraubenförmigen Strömungsweges aus dem Meridianfluß abgetrennt werden. Hierdurch wird im Ergebnis eine Verminderung der Partikelkonzentration in dem Reingasvolumenstrom 96 erzielt. Gleichzeitig werden durch die schnellere örtliche Konzentrationminderung die örtlichen Drehimpulsverluste in diesem Bereiche des Strömungsfeldes vermindert. Dieses ermöglicht örtliche höhere Drehgeschwindigkeiten, was wiederum die Konzentrationsminderung beschleunigt. Insgesamt ergibt somit die Ausgestaltung von Tauchrohren 35 mit veränderlichem Querschnitt sich zyklisch unterstützende strömungs- und trennmechanische Verbesserungen In der Feinabtrennzone, die sich in höheren Abtrenn- und Abscheideleistungen der Wirbelkammer 50 bei geringerem Druckverlust im Vergleich zur Verwendung von zylindrischen Tauchrohren auszeichnet. Gemäß der Erfindung können die Tauchrohre 35 vom Eintrittsabschnitt 36 zum Austrittsabschnitt 37 in der Koaxialebene eine progressiv zunehmende Wandkrümmung aufweisen.

Von besonderer Bedeutung ist die Anordnung der Kontaktzone 93 zwischen der Hauptströmung im Hauptströmungskanal 69 und dem Wirbel 54. Die Lage der Kontaktzone 109 beeinflußt die Drehstärke des Wirbelfeldes und damit die Steigerung der Trenn- und Abscheidewirksamkeit der Wirbelkammer 50. Besonders vorteilhaft ist es, Wirbelkammern 50 so auszubilden, daß die ideelle Mantelfläche der Kontaktzone 109 im Verhältnis zu dem Zylindermantel der Wirbelkammer 50 groß ausgebildet ist. Die hierdurch bedingten größeren Hauptströmungsumlenkungen bewirken geringere Strömungsverluste bei der Drehimpulseinleitung. Die Drehimpulseinleitungsverluste entstehen aus der Mischung der Impulsanteile Iₖ und Iₘ. Iₖ ist der Impulsanteil der Bodenschichtströmung, der als antreibender Drehimpuls aus der energiereichen Hauptströmung in die Wirbelkammer 50 eintritt. Iₘ ist ein innerhalb der Wirbelkammer 50 sekundär zirkulierender bremsender Impulsanteil der Bodenschichtströmung. Beide Impulsanteile durchdringen die Bodenschichtströmung in spiralig sich verengenden Zonen mit fortlaufendem Impulsstärkenausgleich durch Vermischung. Eine große relative Kontaktbogenlänge bewirkt daher eine Vergrößerung der Iₖ-Zonen und Verkleinerung der Iₘ-Zonen, wodurch am Tauchrohr 35 größere Drehgeschwindigkeiten erzielt werden (Fig. 3).

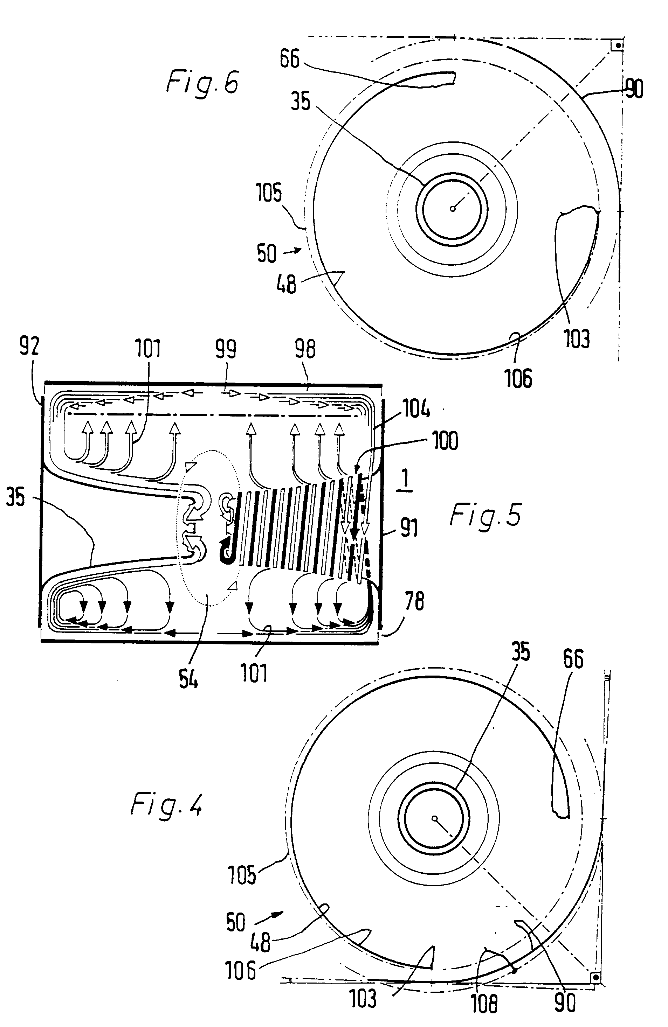

Zur Vermeidung von Impulsmischverlusten in der Antriebsströmung im Hauptströmungskanal 69 ist eine Rotationsymmetrie der Strömung auf dem Kontaktbogen 109 anzustreben. Hierzu ist der Hauptströmungskanalbogen 90 und damit der Hauptströmungskanalmantel wie eine logarithmische Spirale gekrümmt (Fig. 3 und 4). Die örtlichen Strömungsquerschnitte des Hauptströmungskanals 69 nehmen in Hauptströmungsrichtung gleichmäßig so ab, daß in dem Hauptströmungskanal 69 eine konstante oder zumindest annäherend konstante mittlere Hauptströmungsgeschwindigkeit erhalten wird. Dies bewirkt dann konstante oder annäherend konstante Umfangsgeschwindigkeiten an der Peripherie des Wirbels 54 im Bereich der Kontaktzone 109. Weiterhin werden in der Bodenschichtströmung rotationssymmetrische bzw. weitgehend rotationssymmetrische Umfangs-und Radialgeschwindigkeitsverteilungen erzielt. Statt einer logarithmischen Spiralkrümmung des Mantels 90 des Hauptströmungskanals 69 kann auch eine andere Spiralkrümmung vorgesehen sein. Zur weiteren Verbesserung der Trenn- und Abscheidewirksamkeit des Wirbels 54 ist auch der Zylindermantel 48 der Wirbelkammer 50 spiralig gekrümmt ausgebildet. Der Wirbelkammerbogen 106 kann hierbei eine spiralige, z. B. logarithmisch spiralige, Krümmung aufweisen. Hierdurch werden die Hantelwandimpulsverluste der Sekundärzirkulationsströmung im durch den Zylindermantel 48 gebildeten Wirbelgehäuse vermindert. In Fig. 4 sind die spiraligen Krümmungen des Hauptströmungskanalbogens 90 und des Wirbelkammerbogens 106 im Vergleich zu dem Bezugskreis 108 des Hauptströmungskanalbogens und dein Bezugskreis 105 der Wirbelkammer 50 dargestellt. Besonders vorteilhaft ist es, daß durch die spiralige Krümmung des Zylindermantels 48 die Hauptströmung von der Anströmkante 103 angeschnitten wird. Hierdurch wird ein Teil der energiereichen Hauptströmung über die gesamte Länge der Anströmkante 103 dem Wirbel 54 zugeführt, der hierdurch einen antreibenden Drehströmungsimpuls auch am Wirbelkammermantel erhält. Wie in Fig. 5 schematisch dargestellt, kann durch die spiraligen Krümmungen des Zylindermantels 90 des Hauptströmungskanals 69 sowie des Zylindermantels 48 der Wirbelkammer 50 eine weitgehende Rotationssymetrie der gesamten Wirbelkammerdrehströmung erzeugt werden, die von der Wirbeldrehachse ausgeht, die der Mittelachse 58 des Wirbels entspricht. Da nur ein Teil des Sekundärvolumenstromes als Reingasvolumenstrom 96 aus,den Tauchrohren 35 abgesaugt wird, fließt der verbleibende Teil des Sekundärvolumenstromes aus der Tauchrohrringströmungszone verteilt radial nach außen zurück und verstärkt die Sekundärzirkulation. Neben einer Verstärkung des Drehimpulses erfolgt auch eine Verstärkung der Partikelabtrennung in der Feinabtrennzone 100 und des radialen Partikeltransports durch das Wirbelfeld. Bei direkt abscheidenden Wirbelkammern 50 mit Austragsspalten 78 an den Wirbelkammerböden 91, 92 sowie den Böden des Hauptströmungskanals 69 wird die Abscheideleistung erhöht, da durch den verstärkten Sekundärfluß die abscheidegünstigen Eckenströmungsgeschwindigkeiten erhöht werden.

Wie in Fig. 6 dargestellt, kann die Wirbelkammer 50 auch so ausgebildet sein, daß der Hauptströmungskanalbogen 90 kreisbogenförmig und nur der Wirbelkammerbogen 106 spiralig gekrümmt ist. Hierdurch sind Wirbelkammern 50 mit kürzeren Kontaktbogenlängen der Kontaktzone 109 möglich, was Vorteile bei der Gestaltung von Reihenschaltungen von Wirbelkammern 50 sowie bei der Fertigung bieten kann.

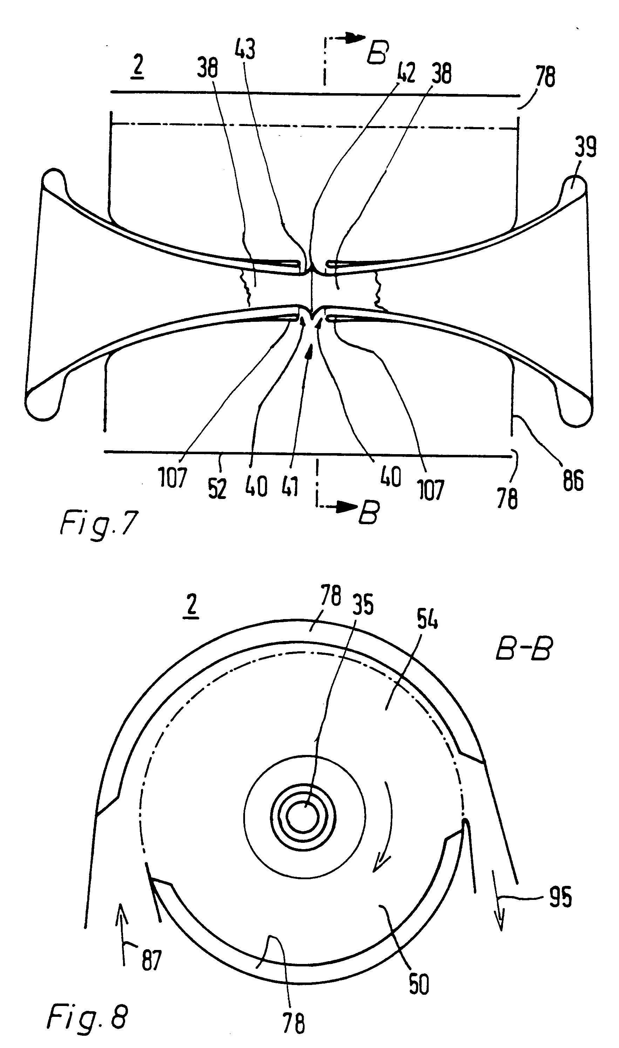

Während in der Wirbelkammer 50 in der Feinabtrennzone 100 an der Außenwandung der Tauchrohre 35 hohe Drehgeschwindigkeiten der Strömung angestrebt werden, muß innerhalb der Tauchrohre die hohe kinetische Strömungsenergie in Druck zurückverwandelt werden. Hierzu sind die Tauchrohre 35 wie bereits zum Wirbelkammerabscheider 1 erläutert, mit einen sich vom Eintrittsabschnitt 36 zum Austrittsabschnitt 37 erweiternden Querschnitt ausgebildet, so daß für die Innenströmung der Tauchrohre 35 ein Dralldiffusor entsteht. Eine im Axialschnitt trompetenartige Ausgestaltung des Dralldiffusors mit in Strömungsrichtung zunächst schwacher und dann zunehmend stärkerer Wandkrümmung hat sich als besonders vorteilhaft erwiesen. Es sind allerdings auch andere Gestaltungen der Tauchrohre 35 möglich. Besonders vorteilhaft ist es die Tauchrohrinnensströmung durch einer Tauchrohrkern oder Diffusorinnenkörper 38 in eine Ringströmung umzuwandeln. In den Fig. 7 und 8 ist ein Wirbelkammerabscheider 2 dargestellt, bei dem an dem Austrittsabschnitt 37 eines jeden Tauchrohres 35 ein Spiralgehäuse 39 als Dralldiffusor angeordnet ist. In dieses Spiralgehäuse 39 mündet der Diffusorinnenkörper 38 tangential ein. An dem Gehäuseboden 86 des Abscheidergehäuses 52 sind Austrittsspalte 78 ausgebildet. Der Wirbelkammerabscheider 2 stellt somit einen direkt abscheidenden Wirbelabscheider dar. Die Diffusorinnenkörper 38 sind mittels eines Leitkörpers 41 einstückig ausgebildet. Der Leitkörper 41 weist einen sich radial erstreckenden Wulst 42 auf, durch dem den Tauchrohren 35 zugeordnete Strömungsleitflächen 43 ausgebildet werden.

Um die örtlichen Druckverluste im Bereich der Einlaßöffnungen 40 der Tauchrohre 35 zu vermindern, sind die Tauchrohreinmündungen 107 lippenförmig ausgebildet.

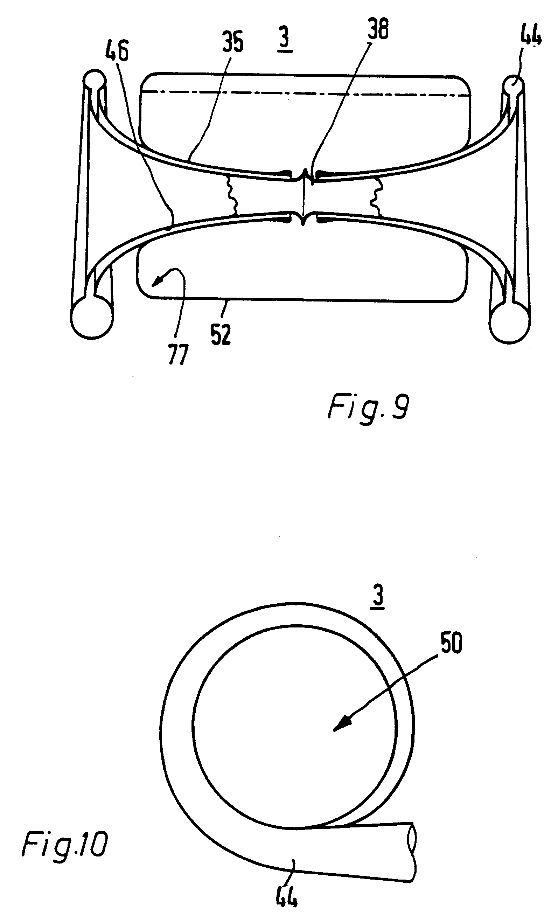

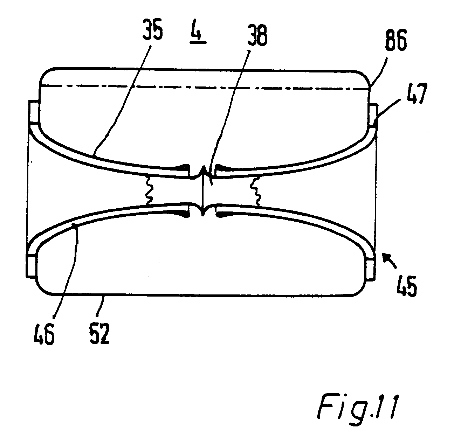

In den Fig. 9 und 10 ist ein Wirbelkammerabscheider 3 dargestellt, bei dem die Wirbelkammer 50 keine Austragsspalte 78 aufweist. Zur Verminderung der Impulsumlenkverluste im Bereich der Wandströmungen sind die Strömungsecken der Wirbelkammer 50 gerundet ausgebildet. Das Spiralgehäuse 44 weist einen sich in Strömungsrichtung erweiternden Querschnitt auf und ist damit als Dralldiffusor optimiert. Das Spiralgehäuse 44 kann wie in Fig. 10 dargestellt einen Strömungsaustritt oder aber auch mehrere tangentiale Strömungsaustritte haben. Die trompetenartige Krümmung des Ringspaltdralldiffusors 46 endet im Axialschnitt in einer Ebene senkrecht zur Mittelachse des Tauchrohrs 35, um die radiale Erweiterung der örtlichen Ringspaltquerschnitte möglichst groß zu gestalten. Hierdurch wird eine Umlenkung des Meridianflusses im Ringspaltdralldiffusor 46 von 90° erzielt, was den Druckrückgewinn im Ringspaltdralldiffusor 46 vergrößert. Das Spiralgehäuse 44 im Anschluß an den Ringspaltdralldiffusor 46 kann relativ einfach ausgebildet sein.

Der Wirbelkammerabscheider 4 nach Fig. 11 weist zwei Tauchrohre 35 auf, die mittels eines Diffusorinnenkörpers 38 als trompetenförmige Ringspaltdralldiffusoren 46 ausgebildet sind. Diese enden an den Gehäuseböden 86 des Abscheidergehäuses 52, so daß eine gegenüber dem Wirbelkammerabscheider 3 geringere Baugröße erzielt wird. Im Austrittsbereich 45 des Ringspaltdralldiffusors 46 sind Umlenkschaufeln 47 angeordnet, die der Entdrallung der bis Zum Austrittsbereich umfangs- und meridianmäßig verzögerten Tauchrohrinnenströmung dienen (Fig. 11). Die Umlenkschaufeln 47 können gekrümmte Blechschaufeln und/oder profiliert sein.

Gegenüber der Verwendung von Spiralgehäusen 39, 44 ermöglicht die Verwendung von Umlenkschaufeln 47 eine Reduzierung der Baugröße des Wirbelkammerabscheiders 4.

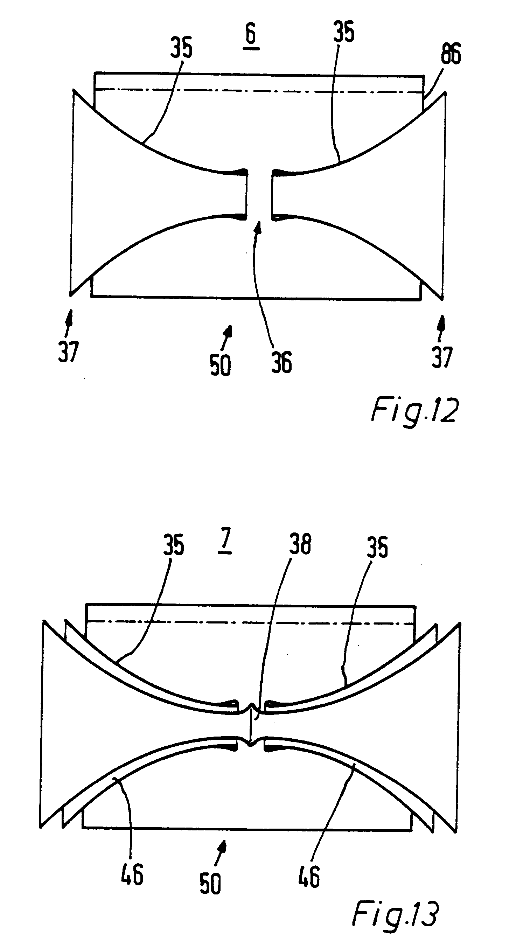

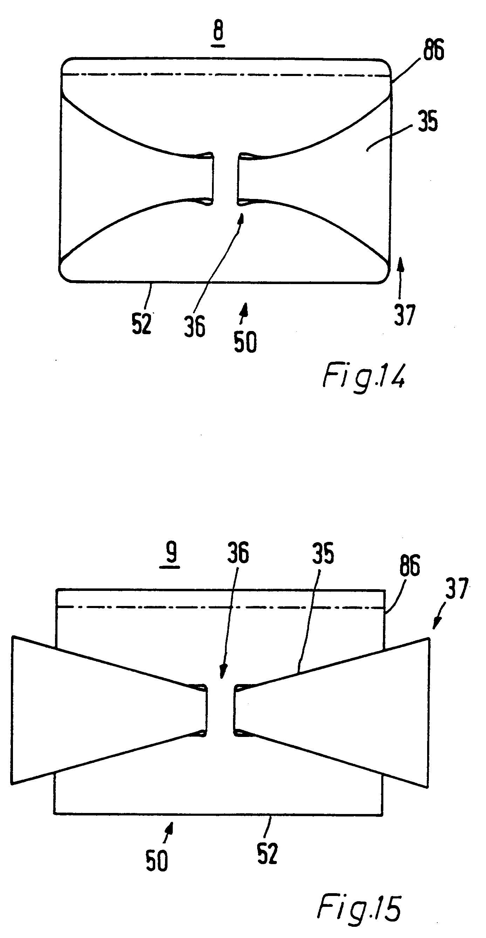

In den Figuren 12 bis 15 sind weitere Wirbelkammerabscheider 6, 7, 8, 9 schematisch dargestellt, die sich hinsichtlich der Ausbildung der Tauchrohre 35 unterscheiden. Bei den Wirbelkammerabscheidern 6 und 7 nach Fig. 12 und 13 sind die Tauchrohre 35 in baulich vereinfachten Wirbelkammern 50 ohne Austragsspalte mit scharfen Strömungsecken angeordnet. Die Austrittsabschnitte 37 der Tauchrohre 35 sind über die Gehäuseböden 86 der Wirbelkammern 50 hinausgeführt. Die Tauchrohre 35 selbst sind vereinfacht trompetenartig ausgebildet, wobei bei dem Wirbelkammerabscheider 7 ein ebenfalls trompetenartig ausgebildeter Diffusorinnenkörper 38 vorgesehen ist, durch den in den Tauchrohren 35 ein Ringspaltdralldiffusor 46 ausgebildet wird. Durch die besondere Ausbildung des Diffusorinnenkörpers 38 werden örtliche schädliche Rückströmungen mit Sekundär- oder Tertiärzirkulationen unterdrückt, wie sie beim Tauchrohr ohne Kern auftreten und die Schichtströmungsverzögerung stören. Es ist möglich, außenseitig ein Endspiralgehäuse oder Endleitschaufeln im Ringspaltdralldiffusor 46 vorzusehen.

Der Wirbelkammerabscheider 8 nach Fig. 14 ist aufgrund seiner vereinfachten Bauform besonders als Element für einfache Serienschaltungen oder Parallelschaltungen von Wirbelkammern 50 geeignet. Da die Austrittsabschnitte 37 der trompetenartig ausgebildeten Tauchrohre 35 in der Ebene der Gehäuseböden 86 enden, ergibt sich ein äußerst kompaktes Abscheidergehäuse 52.

Eine weitere vereinfachte Ausführungsform eines Wirbelkammerabscheiders 9 ist in Fig. 15 dargestellt. Hier sind in einem eckigen Abscheidergehäuse 52 Tauchrohre 35 angeordnet, die als konische Dralldiffusoren ausgebildet sind. Die Endabschnitte 37 der Tauchrohre 35 ragen über den Gehäuseboden 86 hinaus. Es ist möglich, in den konischen Tauchrohren 35 konische Diffusorinnenkörper einzusetzen, die nicht näher dargestellt sind. Am Austrittsabschnitt 37 der Tauchrohe 35 können auch Endleitschaufeln oder aber jeweils ein Endspiralgehäuse vorgesehen sein, während die Wirbelkammer 50 selbst mit Austragsspalten versehen sein kann.

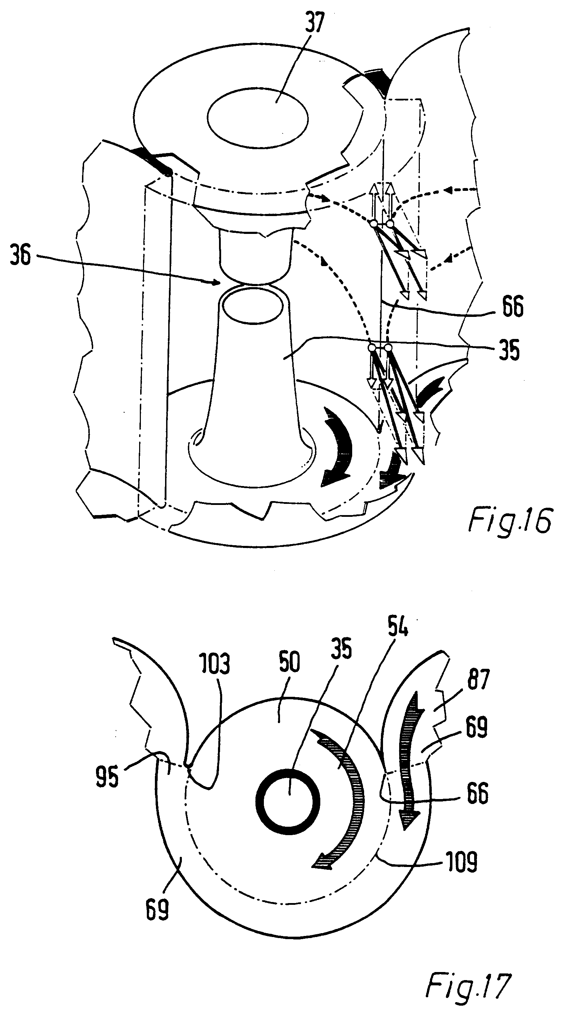

Um die an den Abströmkanten 66 von Wirbelkammern 50 üblicherweise entstehenden Wirbel und damit Strömungsverluste zu verringern ist es erforderlich, daß die senkrechten Sekundärgeschwindigkeiten beidseitig der Abströmkante 66 gleichsinnig gerichtet und örtlich gleich groß sind. Wie in Fig. 16 und 17 dargestellt, wird dies dadurch erreicht, daß auch die der Abströmkante 66 vom Hauptströmungskanal 69 zugeführte Wand eine konkave zylindrische Form aufweist. In diesem Fall fließen der Abströmkante 66 zwei konkav gekrümmte Wandschichtströmungen sowohl vom Wirbel 54 wie auch vom Hauptströmungskanal 69 her zu.

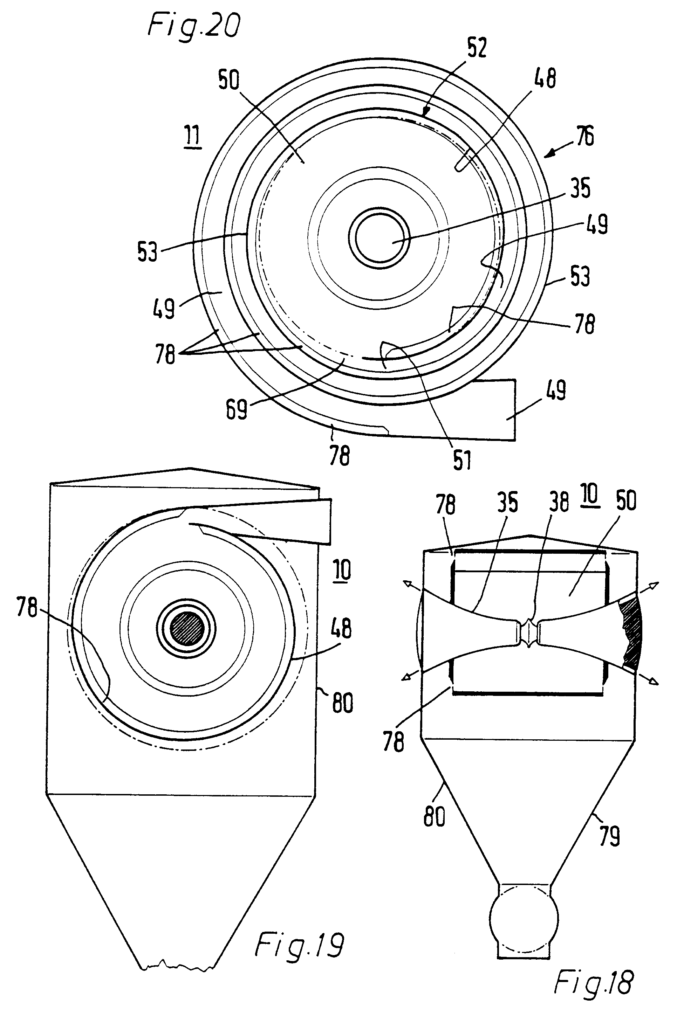

Um bei Direktabscheidern die Abscheideleistung zu erhöhen kann der Zylindermantel 48 der Wirbelkammer 50 spiralig gekrümmt wie z. B. logarithmisch spiralig gekrümmt ausgebildet sein (Fig. 19). Hierdurch wird die mittlere Eintrittsströmungsgeschwindigkeit in der Mantelwandschichtströmung als Umfgangsgeschwindigkeit etwa konstant gehalten oder in Umfangsrichtung des Strömungsverlaufes noch erhöht, sofern die radialen Abstände der Mantelwandschichtströmung von der Wirbeldrehachse abnehmen. Der Einfluß der Wandreibungsabbremsung wird durch die spiralige Führung der Mantelwandschichtströmung mit abnehmendem Krümmungsradius kompensiert. Da durch die spiralige Ausbildung des Zylindermantels 48 die Eckströmungsgeschwindigkeiten an den Austragsspalten 78 erhöht werden, wird die Austrags- und Abscheidewirkung des Wirbelkammerabscheiders 10 ebenfalls erhöht. Wie in Fig. 18 gezeigt, können in dem Wirbelkammerabscheider 10 auch Tauchrohre 35 mit sich über ihre Länge vergrößerndem Querschnitt angeordnet sein.

Es ist auch möglich, einen Spiraldirektabscheider 76 mit einem Vorabscheider zu versehen (Fig. 20). Hierzu ist vor der Hauptgasstromeinlaßöffnung des Hauptströmungskanals 69 ein Vorabscheiderkanal 49 vorgesehen, der die gleiche Bauhöfe wie das Abscheidergehäuse 52 hat. Im Regelfall ist der Vorabscheiderkanal 49 im Querschnitt rechteckig ausgebildet. An allen für die Hauptströmung konkaven Eckenströmungszonen des Vorabscheiderkanals 49 können Austragsspalte 78 vorgesehen sein, die die Vorabscheidung verstärken. Die rechteckigen Strömungsquerschnitte im Vorabscheiderkanal 49 können entweder konstant gehalten werden oder aber sich entsprechend den Spiralwindungen in Hauptströmungsrichtung kontinuierlich verengen. Hierdurch würde die Vorabscheiderströmung dann bis zum Eintritt in die mit einem spiraligen Zylindermantel 48 ausgestattete Wirbelkammer 50 beschleunigt, so daß sich die Abscheideleistung erhöht.

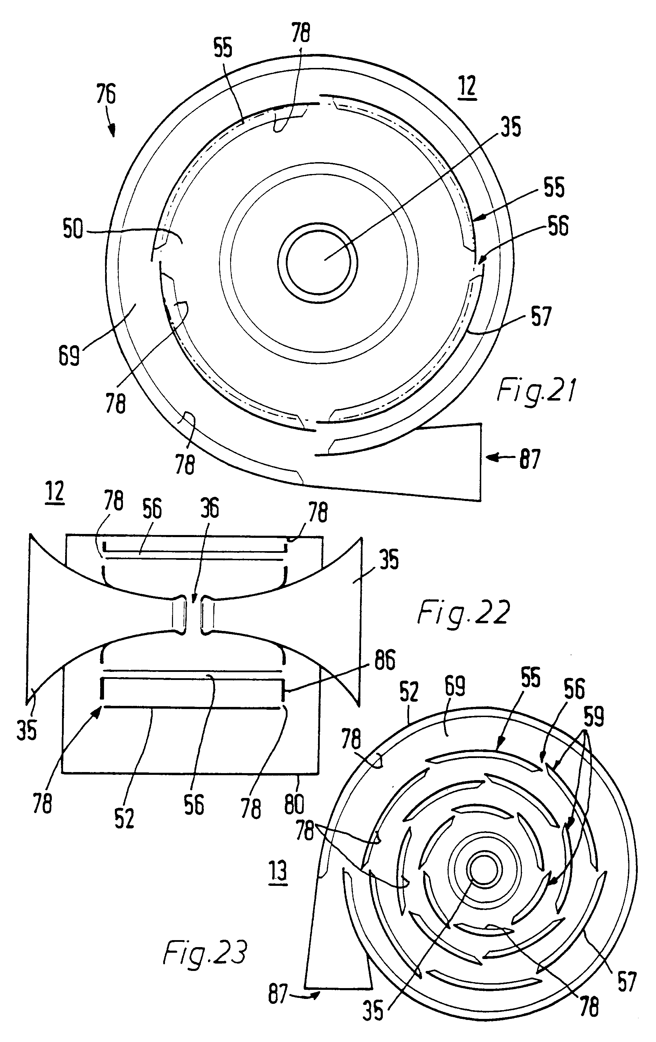

In Fig. 21 und 22 ist ein als Spiraldirektabscheider 76 ausgebildeter Wirbelkammerabscheider 12 dargestellt, bei dem das Rohgas über den Rohgaseintritt 87 der Wirbelkammer 50 über mehrere tangentiale Eintrittsspalte 56 zugeführt wird. Hierzu ist der Wirbel 54 durch Strömungsleitlamellen 57 von dem Hauptströmungskanal 69 distanziert. Die einzelnen Eintrittsspalte 56 sind jeweils zwischen zwei Strömungsleitlamellen 57 angeordnet, die in ihrer Gesamtheit ein Verteilergehäuse 55 bilden. Die Eintrittsspalte 56 sind parallel zur Wirbelachse angeordnet, haben gleiche Spaltweiten und erstrecken sich über die gesamte Bauhöhe der Wirbelkammer 50. Die Abtrenn- und Abscheideleistungen erhöhen sich mit der Anzahl der Eintrittsspalte 56. Die Strömungsleitlamellen 57 sind zweckmäßigerweise gleich ausgebildet. Sie können spiralig oder logarithmisch spiralig gekrümmt sein und werden so eingestellt, daß die einzeln Mantelwandschichtströmungen nach dem Durchtritt durch einen Eintrittsspalt 56 in die Wirbelkammer 50 spiralig oder logarithmisch spiralig geführt werden. Sofern die Strömungsleitlamellen 57 umfangsmäßig relativ kurz sind, können sie als kreisbogenförmig gebogene zylindrische Bleche ausgebildet werden, die ebenfalls spiralig eingestellt werden. Hierdurch wird eine gewisse bauliche Vereinfachung des Wirbelkammerabscheiders 12 erzielt. Der Hauptströmungskanal 69 kann, wie in Fig. 21 dargestellt, so ausgebildet sein, daß eine umlaufende Verteilerströmung ausgebildet wird. Es ist aber möglich, die Spaltzahl und die Strömungsleitlamellen 57 so anzuordnen, daß die Verteilerströmung nach einem Umlauf oder weniger in einem Eintrittsspalt 56 endet. Darüber hinaus ist es möglich, den Hauptströmungskanal 69 so auszubilden, daß sich eine Umlaufströmung mit breiterer radialer Erstreckung ergibt. Durch die sich dann einstellenden Mehrfachumläufe der Strömung wird eine Strömungsbeschleunigung zwischen dem Eintritt und den Mehrfachaustritten erzielt, die gleichzeitig Spalteintritte für das Direktabscheiderwirbelgehäuse darstellen. Wie in Fig. 21 und 22 angedeutet, können an allen zu den örtlichen Primärströmungszonen konkav gekrümmten Eckenzonen sowohl im Wirbel wie auch im Verteilergehäuse in den ebenen Gehäuseböden Austragsspalte 78 ausgebildet sein, um die Abscheidewirkung der in diesen Ecken stark gekrümmten Sekundärschichtströmungen möglichst weitgehend zu nutzen. Der Spiraldirektabscheider 76 nach Fig. 22 ist über die Austragsspalte 78 mit einem Staubbunker 80 verbunden.

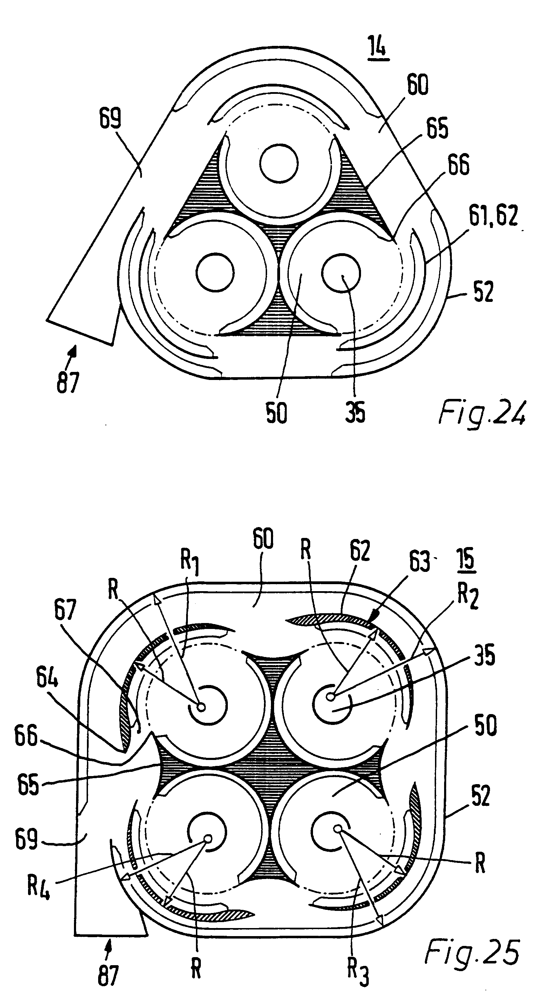

In Fig. 23 ist ein Wirbelkammerabscheider 13 dargestellt, bei dem in radialer Richtung zur Mittelachse 58 des Wirbels 54 diesen umgebend mehrere kreisförmige Leitschaufelkränze angeordnet sind. Diese haben unterschiedliche Bezugsradien und bestehen aus gleichmäßig verteilten gekrümmten Strömungsleitlamellen 57. Zwischen den einzelnen Strömungsleitlamellen 57 ist jeweils ein Eintrittsspalt 56 ausgebildet. An sämtlichen konkaven Strömungsecken einschl. der äußeren spiralig-zylindrischen Gehäuseummantelung können in den ebenen Gehäuseböden Austragsspalte 78 angeordnet sein, so daß im Verteilergehäuse 55 eine gesteigerte Staubaustragswirkung erzielt wird. Die Strömungsleitlamellen 57 können beim Wirbelkammerabscheider 13 als Blechschaufeln oder Leitbleche ausgebildet sein, da der Dickeneinfluß einer Profilierung nur geringen Einfluß auf die Strömung hätte. Wie beim Wirbelkammerabscheider 12 sind auch hier die Strömungsleitlamellen 57 spiralig oder logarithmisch spiralig gekrümmt. Die Einstellung auf jedem Leitschaufelkranz 59 zur Ausbildung einer rotationssymmetrischen spiraligen Primärströmung erfolgt entsprechend den jeweiligen örtlichen Bezugsradien. Die für die Strömungsleitlamellen 57 angestrebten Spiralkrümmungen können auch hier durch Kreisbögen angenähert werden.

Es ist auch möglich, mehrere Wirbelkammern 50 in kompakter Anordnung zu einem Wirbelkammerabscheider zu verbinden. In Fig. 24 ist ein Wirbelkammerabscheider 14 dargestellt, der drei Wirbelkammern 50 aufweist, die in einem gemeinsamen Abscheidergehäuse 52 angeordnet sind. Der Hauptströmungskanal 69 ist um die Wirbelkammern 50 geführt, wobei sich der Strömungsquerschnitt des Hauptströmungskanals 69 aus Gründen der Kontinuität in Strömungsrichtung abschnittsweise nach jeder Wirbelkammer 50 vermindert. Im Bereich der Strömungsumlenkungen des Hauptgasstromes 60 sind gekrümmte Leitbleche 61 oder Leitprofile 62 mit gegebenenfalls einer Dickenverteilung angeordnet. Die Leitbleche 61 oder Leitprofile 62 sind spiralig oder logarithmisch spiralig gekrümmt, können jedoch auch kreisbogenförmig ausgebildet und spiralig angestellt sein. Der in Fig. 25 als Kompaktanordnung von vier Wirbelkammern 50 dargestellte Wirbelkammerabscheider 15 weist ebenfalls einen umlaufenden Hauptgasstrom 60 auf. Im Bereich der Strömungsumlenkungen des Hauptgasstroms 60 sind wie bei dem Wirbelkammerabscheider 14 Leitprofile 62 angeordnet. Diese sind so ausgebildet, daß die dem jeweiligen Wirbel 54 zugewandte Fläche des entsprechenden Leitprofils 62 spiralig gekrümmt und die konvexe Außenfläche 63 des Leitprofils 62 kreisbogenförmig gekrümmt ist. Die Nasen 64 der Leitprofile 62 sind so geformt, daß für jede Wirbelkammer 50 mit der Leitfläche 65 zur Abströmkante 66 ein Einströmabschnitt 67 mit sich in Strömungsrichtung verringerndem Querschnitt ausgebildet ist. Die Kompaktanordnung der Wirbelkammerabscheider 14 und 15 kann insoweit variiert werden, als die jeweils in Strömungsrichtung letzte Wirbelkammer 50 als Direktabscheider mit einem Strömungseintritt ausgebildet sein kann. Da an diesem kein Restrohgasaustritt mehr erfolgt, liegt in einem solchen Fall keine umlaufende Verteilerströmung vor. Durch entsprechende geometrische Ausbildung der Wirbelkammer sowie der Tauchrohre 35 ist es möglich, die Wirbelkammerabscheider 14, 15 für den jeweiligen Anwendungsfall angepaßt hinsichtlich ihrer Abscheideleistungen und der gewünschten Druckverlustverminderung zu optimieren.

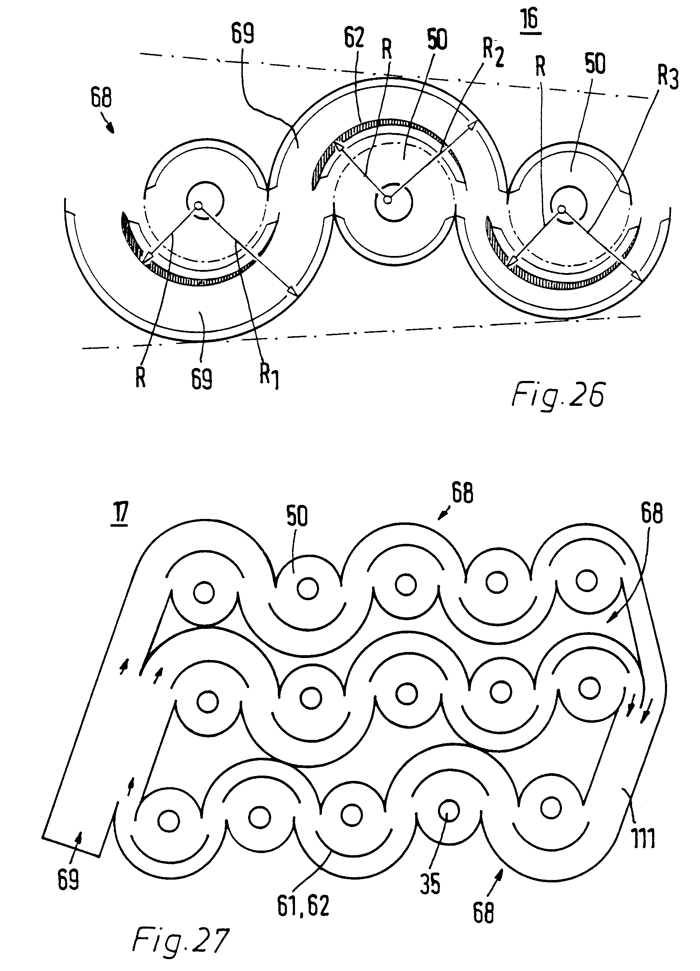

Die Wirbelkammern 50 können auch direktabscheidend in verschiedener Geometrie als Reihenschaltung miteinander verbunden werden. Vorteilhaft sind z. B. geschlossene Wirbelkammerreihen aus direktabscheidenden Wirbelkammern 50 mit einem Direktabscheider als Endabscheider. Wenn auf den Direktendabscheider verzichtet wird, bilden die dann noch in einer Reihe befindlichen direktabscheidenden Wirbelkammern 50 eine offene direktabscheidende Wirbelkammerelementarreihe mit Restrohgasaustritt. Bei diesen direktabscheidenden Wirbelkammerreihen besteht der Vorteil niedriger und konstanter oder weitgehend konstanter Einzelreingasstaubgehalte und konstanter oder weitgehend konstanter Restrohgasstaubgehalte der Einzelwirbelkammern. Durch entsprechende Auslegung können die Einzelrestrohgasstaubgehalte in Hauptströmungsrichtung noch vermindert werden. Einen besonderen Vorteil baulicher Vereinfachung ohne Strömungsstörung der Wirbelkammern bietet der Wirbelkammerabscheider 16, der als Reihenschaltung 68 von Wirbelkammern 50 ausgebildet ist (Fig. 26). Die Wirbelkammern 50 sind gleich und so ausgerichtet, daß ihre Mittelachsen auf gleicher Ebene zueinander fluchten. Der Hauptströmungskanal 69 ist von der jeweiligen Wirbelkammer durch ein Leitprofil 62 mit einem Kontaktbogenwinkel von ca. 180° distanziert. Der freie Strömungsabschnitt des Hauptströmungskanals 69 verringert sich kontinuitätsmäßig nach jeder Wirbelkammer 50. Bei der Reihenschaltung 68, die als offene Elementreihenschaltung ausgebildet ist, sind die Leitprofile 62 an der konkaven Seite spiralig gekrümmt und an der konvexen Seite kreisbogenförmig gekrümmt ausgebildet. Da sich der Querschnitt des Hauptströmungskanals 69 in Strömungsrichtung verringert, ist die Wirbelkammerreihe keilförmig ausgebildet, was konstruktiv nutzbare Vorteile bietet.

Der Wirbelkammerabscheider 17 nach Fig. 27 besteht aus drei Reihenschaltungen 68, von denen zwei parallel zueinander angeordnet sind, während die dritte entgegengesetzt ausgerichtet ist. Der Hauptströmungskanal 69 mündet in zwei Reihenschaltungen 68, die gemeinsam in einen Rückführkanal 111 münden. Von diesem wird die dritte Reihenschaltung beaufschlagt, deren Ausgang mit dem Hauptströmungskanal 69 verbunden ist. Statt einer Umlaufschaltung kann der Wirbelkammerabscheider 17 auch so variiert werden, daß lediglich zwei oder aber auch drei parallel geschaltete Reihenschaltungen 68 ausgangsseitig mit einer weiteren Reihenanordnung verbunden sind. Als vorteilhaft hat sich die Verwendung von Elementarreihen erwiesen, bei denen 50% des Rohgasvolumenstromes in Reingas umgewandelt wird. Auch bei dem Wirbelkammerabscheider 17 können Austragsspalte 78 vorgesehen sein.

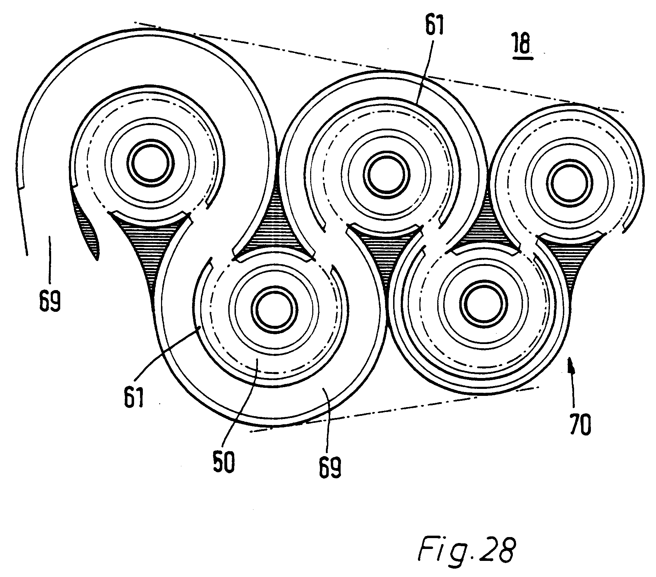

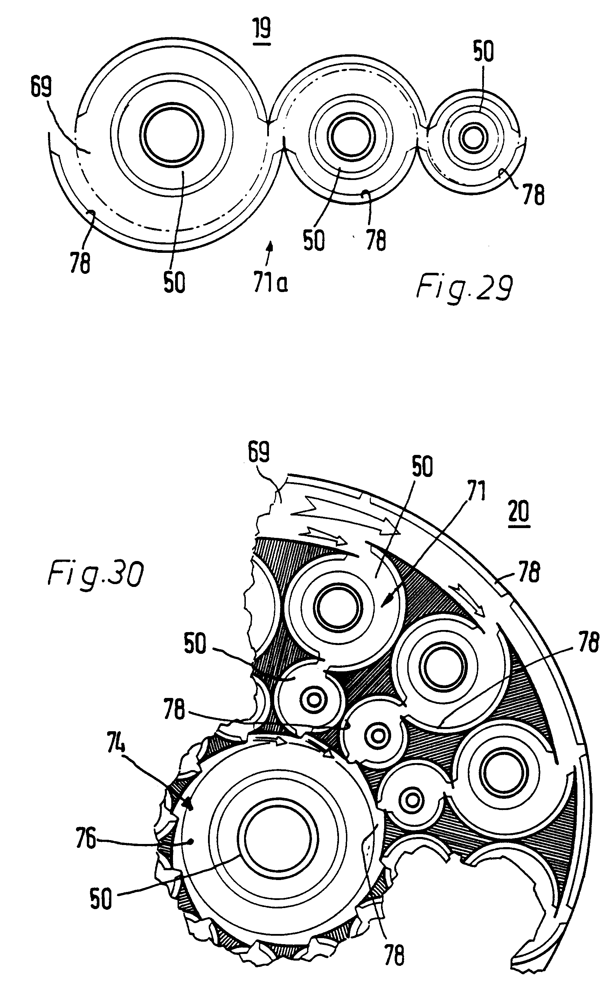

Aus der Reihenschaltung 68 mit direktabscheidenden Wirbelkammern 50 kann auch die in Fig. 28 dargestellte weitere Elementarreihe gebildet werden. Bei dieser ist der jeweilige Kontaktbogenwinkel größtmöglichst ausgebildet. Hierdurch liegen die Wirbelkammern 50 dann an einem schlaufenförmig geführten Hauptströmungskanal 69 in dichter Packung. Die verlorenen Bauvolumina sind bei dieser Ausführungsform relativ gering. Statt der bei den Wirbelkammern 50 der Reihenschaltung 70 vorgesehenen Leitbleche 61 können auch Leitprofile 62 verwendet werden. Ferner ist es möglich, die Reihenschaltung 70 für sich als kompakten Wirbelkammerabscheider 18 einzusetzen. Fig. 29 zeigt eine weitere Ausbildung eines Wirbelkammerabscheiders 19, der aus drei in Reihe geschalteten Wirbelkammern 50 mit abnehmendem Durchmesser besteht. Eine derartige Reihenschaltung 71a von Wirbelkammern 50 kann verschiedenartig zur Ausbildung von Apparaten oder Anlagen mit kreisförmig parallel geschaltet in Kreissektoren angeordneten Elementarreihen dienen.

Bei dem in Fig. 30 dargestellten Wirbelkammerabscheider 20 sind zwischen einem äußeren kreisringförmig angeordneten Hauptströmungskanal 69 und einer mittigen Wirbelkammer 50, die als Endabscheider 74 ausgebildet sein kann, zyklisch radial Reihenschaltungen 70 von zwei Wirbelkammern 50 angeordnet. Der Hauptströmungskanal 69 kann an einer Reihenschaltung 71 enden oder aber so ausgebildet sein, daß eine umlaufende Verteilerströmung entsteht. An den konkaven Strömungseckenzonen des Hauptströmungskanals 69 können Austragspalte 78 vorgesehen sein, ebenso in den Wirbelkammern 50. Besonders vorteilhaft ist es, daß bei zyklischen Parallelschaltungen der Wirbelkammerelementarreihen eine strömungsgünstige und raumsparende Kopplungsmöglichkeit mit einem einzigen Endabscheider gegeben ist, der z. B. ein Spiraldirektabscheider 76 sein kann. Dieser ist hinsichtlich seines Hauptströmungskanals 69 so ausgebildet, daß eine Mehrfachdrehimpulseinleitung möglich ist. Der Wirbelkammerabscheider 20 zeichnet sich durch eine besonders kompakte Bauart aus und kann aus genormten Bauelementen bei nur geringem verlorenen Bauvolumen hergestellt werden.

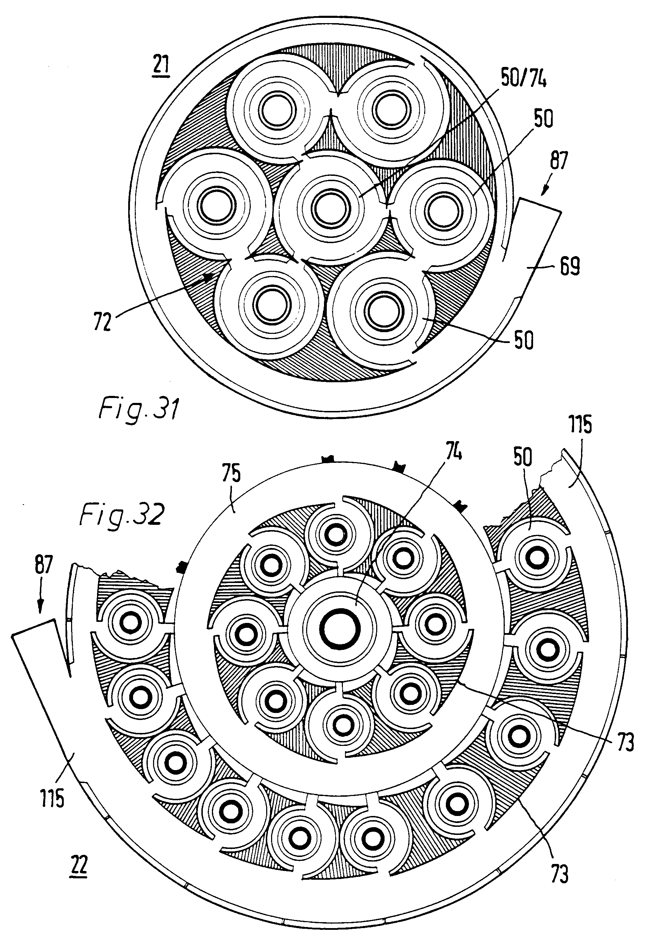

Es ist auch möglich, einen Wirbelkammerabscheider 21 so auszubilden, daß eine Anzahl von Reihenschaltungen 72 gleicher Wirbelkammern 50 zyklisch peripher parallel geschaltet sind (Fig. 31). Ausgangsseitig sind die Reihenschaltungen 72 mit einer Wirbelkammer 50 als Endabscheider 74 verbunden. Dieser Endabscheider kann auch als Spiraldirektabscheider 76 ausgebildet sein. Der Hauptströmungskanal 69 ist kreisförmig um die Anordnung der Reihenschaltungen 72 geführt, so daß eine Umlaufströmung erzielt wird. Die Wirbelkammerreihen 72 können aus direktabscheidenden Wirbelkammern 50 bestehen.

Der Wirbelkammerabscheider 22 nach Fig. 32 besteht aus zwei konzentrisch zueinander angeordneten Wirbelkammerringstufen 73, die außenseitig von dem Verteilerkanal 115 umgeben sind. Die äußere Wirbelkammerringstufe 73 weist parallel zueinander angeordnete Wirbelkammern 50 auf, die innenseitig an einen Zwischenverteilerkanal 75 angeschlossen sind. Über diesen stehen die Wirbelkammern 50 der inneren Wirbelkammerringstufe 73 mit dem Endabscheider 74 in Verbindung. Dieser Wirbelkammerabscheider 22 ist durch die Vielzahl der möglichen Zusammenschaltungen von Wirbelabscheidern mit Wirbelkammern 50 außerordentlich flexibel in der Anpassung an die jeweiligen Einsatzzwecke. So ist es nicht erforderlich, jede Wirbelkammerringstufe 73 in vollem Umfang mit Wirbelkammern 50 zu belegen. Es können vielmehr auch statt einzelner Wirbelkammern 50 Blindstücke oder Blindringelemente eingesetzt werden, die nicht näher dargestellt sind. Es ist daher möglich, nach dem Prinzip des Wirbelkammerabscheiders 22 zyklische Baukastensysteme mit Normteilen zu schaffen.

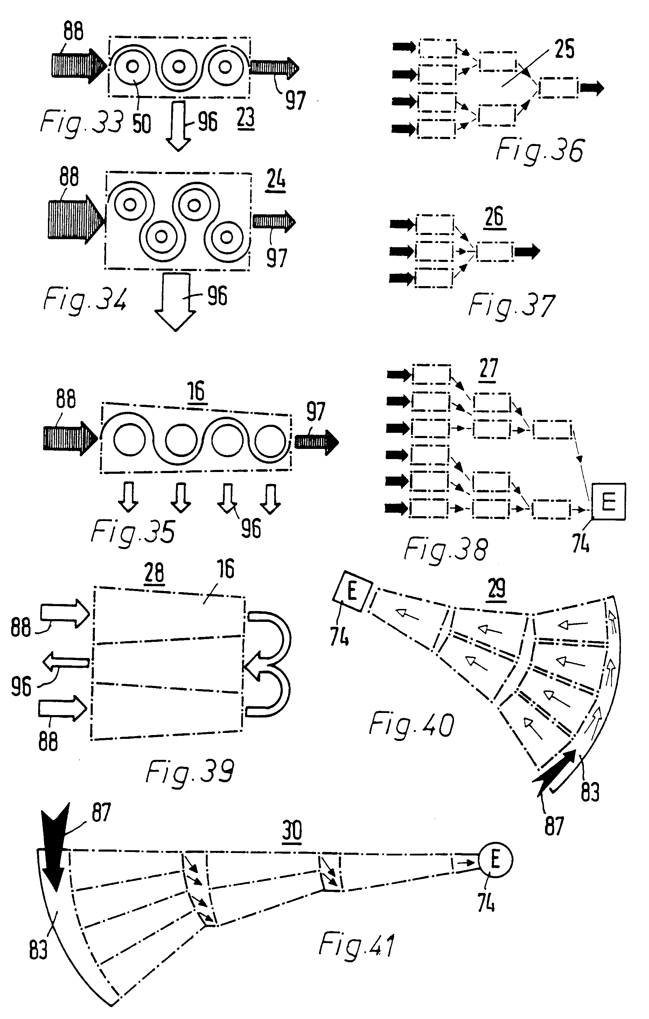

In den Fig. 33 bis 41 sind verschiedene Wirbelkammerabscheider 16 und 23 bis 30 dargestellt, die aus unterschiedlichen Schaltungen von Wirbelkammern 50 bestehen. Die Wirbelkammerabscheider 23, 24, 16 sind als Elementarreihen von Wirbelkammern 50 symbolisiert dargestellt wobei der eintretende Rohgasvolumenstrom 88 und das austretende Restrohgas 97 durch Pfeile dargestellt sind. In Fig. 35 ist am Beispiel des Wirbelkammerabscheiders 16 das kontinuitätsbedingte keilförmige Zusammenlaufen der Elementarreihenbegrenzungen dargestellt.

Mit Elementarreihen von Wirbelkammern 50 wie in Fig. 33, 34, 35 dargestellt können Gruppenschaltungen unterschiedlicher Art vorgenommen werden, die zu Wirbelkammerabscheidern entsprechend der in Fig. 36 bis 41 angedeuteten Art führen. Die Gruppierungsverhältnisse sind vom Gesamtabsaugverhältnis der jeweiligen Elementarreihe von offenen einfachen oder direktabscheidenden Wirbelkammern 50 abhängig. Die Gruppenschaltungen ermöglichen den Vorteil, daß zur Anlagengestaltung normierte Elementarreihen von Wirbelkammern 50 verwendet werden können.

Bei der in Fig. 36 symbolisiert dargestellten Gruppenschaltung liegt ein Gruppierungsverhältnis von 2:1 vor. Zwei baugleiche Wirbelkammerelementarreihen sind auf eine nachfolgende ebenfalls baugleiche Wirbelkammerelementarreihe geschaltet. Das Gesamtabsaugverhältnis der Wirbelkammerelementarreihe beträgt 0,5 oder 50%. Bei der in Fig. 37 dargestellten Gruppenschaltung liegt ein Gruppierungsverhältnis von 3:1 vor bei einem Gesamtabsaugverhältnis der Wirbelkammerelementarreihe von 1/3. In Fig. 38 ist eine weitere Gruppenschaltung symbolisch dargestellt, bei der ein Gruppierungsverhältnis von 3:2 bei zwei Stufen vorliegt. Das Gesamtabsaugverhältnis der Wirbelkammerelementarreihe beträgt 2/3.

Wie in Fig. 38 dargestellt, ist es möglich, unterschiedliche Gruppierungsverhältnisse von Wirbelkammerelementarreihen innerhalb einer Anlage oder eines Multiwirbelkammersystems anzuwenden. Bei dem Wirbelkammerabscheider 27 nach Fig. 38 werden die in Stufen abnehmenden Elementarreihenschaltungen am Ende auf einen Endabscheider geschaltet, der ein Spiraldirektabscheider 76 oder aber auch ein anderer Direktabscheider sein kann. So ist es beispielsweise auch möglich, als Endabscheider einen Gewebe- oder Elektrofilter zu verwenden, die aufgrund des vorgehenden Reinigungsprozesses relativ klein ausgebildet werden können. Der Restvolumenstrom der letzten Stufe bei direktabscheidenden Wirbelkammerelementarreihen kann auch zum Gesamtrohgaseintritt zurückgeführt werden. Ebenso kann der Rückführvolumenstrom zwischen zwei zu wählenden Stufen von Wirbelkammerelementarreihen eingeleitet werden. Es sind somit sowohl Umlaufschaltungen wie auch Teilumlaufschaltungen möglich.

In den Fig. 39 bis 41 sind mit den Wirbelkammerabscheidern 28, 29, 30 Stufenanordnungen von Wirbelkammerelementarreihen dargestellt, bei denen das kontinuitätsbedingte keilförmige Zusammenlaufen des Elementarreihengehäuses wie in Fig 35 dargestellt für Kompaktbauweisen ausgenutzt wird. Von einem äußeren Gesamtrohgaseintrittskanal 83 wird das zu reinigende Gas stufenweise über verschiedenen Elementarreihen von Wirbelkammern 50 jeweils einem Endabscheider 74 zugeführt, der, wie oben beschrieben, als Spiralabscheider 76 od.dgl. ausgebildet sein kann.

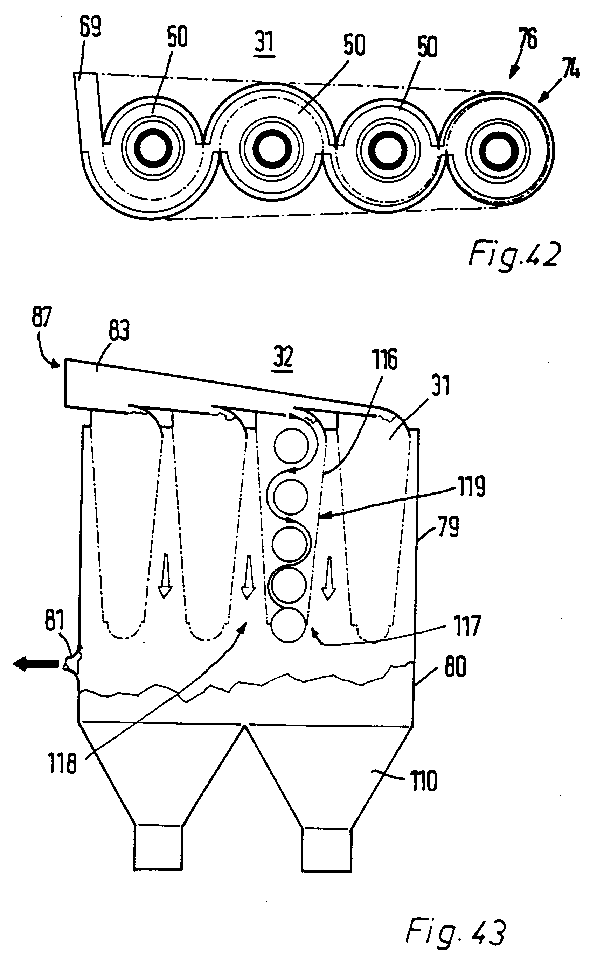

Fig. 42 zeigt als Wirbelkammerabscheider 3 eine geschlossene direktabscheidende Wirbelkammerelementarreihe mit einem eingangsseitigen Hauptströmungskanal 69, drei Wirbelkammern 50 sowie einen als Spiraldirektabscheider 76 ausgebildeten Endabscheider 74. Dieser Wirbelkammerabscheider 31 kann auch mit Leitblechen 61 oder Leitprofilen 62 im Bereich der Wirbelkammern 50 versehen werden.

In Fig. 43 ist eine Entstaubungsanlage 32 dargestellt, die aus einer Parallelschaltung von geschlossenen direktabscheidenden Wirbelkammerelementarreihen 119 entsprechend des Wirbelkammerabscheiders 31 und einem Staubbunker 80 besteht. Jede Wirbelkammerelementarreihe 119 besteht aus einer Reihenschaltung 68, 71, 71a von Wirbelkammern 50, die so ausgebildet ist, daß deren Gehäuse 116 sich zum austrittsseitigen Endabschnitt aus Kontinuitätsgründen keilförmig verjüngen. Die einzelnen Wirbelkammerelementarreihen sind so an dem Gesamtrohgaseintrittskanal 83 parallel zueinander angeschlossen, daß die Zwischenräume 118 zwischen den einzelnen Wirbelkammerelementarreihen 119 sich zu deren Endabschnitten 117 ebenfalls keilförmig erweitern. Durch den hierdurch erzielten Freiraum wird die Funktion der Bunkerabsaugvorrichtung 81 unterstützt, die an dem Staubbunker 80 ausgebildet ist. Der Staubbunker 80 ist durch ein Gehäuse 79 gebildet, an dessen unterem Abschnitt Trichter 110 angeordnet sind. Über diese Trichter kann der im Gehäuse 79 angefallene Staub abgeführt werden. An der einen Seitenwand 35 des Gehäuses 79 ist die Bunkerabsaugvorrichtung 81 vorgesehen. Mittels dieser wird ein kleinerer Volumenstrom aus dem Staubbunker 80 abgesaugt um in den nicht näher dargestellten Austragsspalten 78 der direktabscheidenden Wirbelkammerelementarreihen eine Austragsströmung zu erzeugen. Durch diese wird der Staubaustrag aus den jeweiligen Wirbelkammern 50 und damit ihre Abscheideleistung verbessert. Das keilförmige Zusammenlaufen der Gehäusebegrenzungen der Elementarreihen ermöglicht keilförmige Zwischenräume zwischen den einzelnen Wirbelkammerabscheidern 31 wodurch die durch die Bunkerabsaugung initierte Spaltaustragströmung vergleichmäßigt wird.

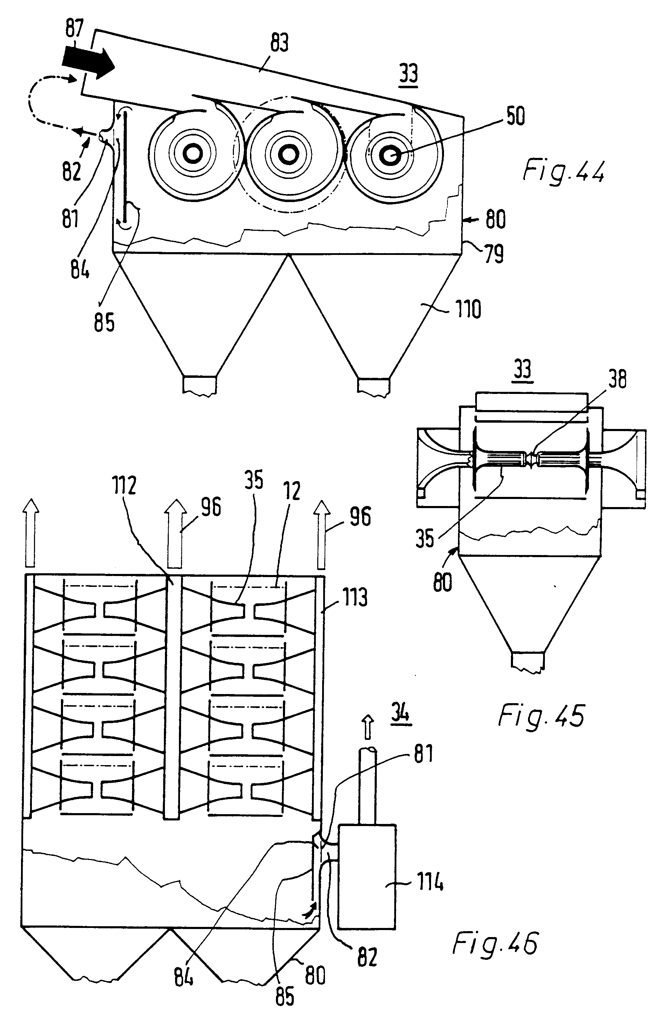

Bei der in Fig. 44 dargestellten Entstaubungsanlage 33 sind an einem Gesamtrohgaseintrittskanal 83 drei Spiraldirektabscheider 76 angeschlossen. An dem Gehäuse 79 des Staubbunkers 80 ist eine Bunkerabsaugvorrichtung 81 vorgesehen, deren Strömungsausgang 82 mit dem Gesamtrohgaseintrittskanal 83 im Bereich des Rohgaseintritts 87 verbunden ist. Vor der Ansaugöffnung 84 der Bunkerabsaugvorrichtung 81 ist ein Prallabscheider 85 vorgesehen. Durch diesen plattenförmigen Prallabscheider 85 wird der Staubgehalt des durch die Bunkerabsaugvorrichtung 81 aus dem Staubbunker 80 abzusaugenden Volumenstromes vermindert. Die Abtrennwirkung des Prallabscheiders 85 wird durch die stark gekrümmte Strömungsumlenkung an den Plattenrändern erzielt.

Bei der in Fig. 45 dargestellten Entstaubungsanlage 33 kann eine Direktabscheideanlage entsprechend der Entstaubungsanlage 32, 33 vorgesehen sein, bei der die außerhalb des Abscheidergehäuses 52 befindlichen Dralldiffusoren der Tauchrohre 35 in einfach zu erstellenden äußeren Absauge-sammelgehäusen für den Reingasvolumenstrom 96 enden.

Bei der in Fig. 46 dargestellten Entstaubungsanlage 34 sind horizontal orientierte übereinander und nebeneinander liegende parallel geschaltete direktabscheidende Wirbelkammerelementarreihen vorgesehen. Die Dralldiffusoren der Tauchrohre 35 münden in kastenförmigen inneren Sammelkanälen 112, 113 die zur Ableitung des Reingasvolumenstroms 96 dienen. Bei der Entstaubungsanlage 34 ist eine Bunkerabsaugvorrichtung 81 vorgesehen, deren Ansaugöffnung 84 von einem Prallabscheider 85 abgedeckt ist. Dieser Prallabscheider 85 ist als Abschirmblech so ausgebildet, daß der Bunkerabsaugvolumenstrom zum Austritt aus dem Staubbunker 80 besonders umgelenkt werden muß. Am Strömungsausgang 82 der Bunkerabsaugvorrichtung 81 ist ein Kleinstaubscheider 114 vorgesehen, der zur Entstaubung des Bunkerabsaugvolumenstroms dient. Der Kleinstabscheider 114 kann ein Spiraldirektabscheider 76 sein.
*sic

## Patentansprüche

1. Verfahren zum Trennen und/oder Abscheiden von festen und/oder flüssigen Partikeln (disperse Phase) aus gasförmigen und/oder flüssigen Medien (kontinuierliche Phase) sowie zum Trennen von gemischten Gasen (Gas-Gas-Trennung) und/oder gemischten Flüssigkeiten (Flüssig-Flüssig-Trennung) sowie zum Sichten und/oder Klassieren mit einem Wirbelkammerabscheider, in dem ein Fliehkraftfeld erzeugt wird, aus dem der spezifisch leichtere Anteil durch zwei in den Wirbelkammerabscheider koaxial und spiegelbildlich zu deren Mittelebenen hineinragende Tauchrohre innerhalb des Zentralbereichs des Wirbelkammerabscheiders abgesaugt wird, dadurch gekennzeichnet, daß bei der Drehimpulseinleitung die Kontaktzone zwischen der Hauptströmung und dem Wirbel so zur festen Zylindermantelbegrenzung eingestellt wird, daß der tangentiale Eintrittsimpuls in die Bodenschichtströmung durch Verkleinerung des in der Wirbelkammer sekundär zirkulierenden Impulsanteils der Bodenschichtströmung vergrößert wird, daß die Bodenschichtströmung rotationssymmetrisch bei konstanter oder annähernd konstanter mittlerer Hauptströmungsgeschwindigkeit ausgebildet wird, daß die Wandschichtströmung des Wirbels in der Wirbelkammer und der Hauptströmung im Hauptströmungskanal der Abströmkante so konkav gekrümmt zugeführt werden, daß die senkrechten Sekundärgeschwindigkeiten beidseitig der Abströmkante gleichsinnig gerichtet und örtlich gleich groß sind, daß der Reingasstrom durch die Tauchrohre so geführt wird, daß in Zonen höchster Strömungsgeschwindigkeit die Strömung nur mit schwachen Meridianflußumlenkungen belastet und daß der Reingasstrom an der Außenwand der Tauchrohre mit zu den Einlaßabschnitten steigender Geschwindigkeit geführt wird, wobei in den Tauchrohren eine Ringströmung erzeugt wird, die in der Austrittszone des Tauchrohrs nach Umlenkung durch Leitschaufeln in eine Quellströmung mit geringer Strömungsgeschwindigkeit am Austritt umgewandelt wird.

2. Wirbelkammerabscheider zur Durchführung des Verfahrens nach Anspruch 1, mit mindestens einer Wirbelkammer (50) mit allgemein zylindrischer Wandkrümmung mit einer scharfen Abströmkante (66) am Eingang des Hauptströmungskanals (69) in die Wirbelkammer (50) und jeweils zwei Tauchrohren (35), die koaxial zueinander und parallel zur Abströmkante (66) in der Wirbelkammer (50) angeordnet sind, sich jeweils von deren Endwänden aufeinander zuerstrecken und mit einem Reingasauslaß in Verbindung stehen und einen sich erweiternden Auslauf aufweisen, wobei der Mantel (90) des Hauptströmungskanals (6) spiralig gekrümmt ist und die der Abströmkante (66) vom Hauptströmungskanal (69) zugeführte Wand eine konkave zylindrische Form aufweist, der Rohgaseintritt (87) tangential zum Hauptströmungskanalboden (90) an der äußeren Gehäusewand der Wirbelkammer (50) ausgebildet ist, die Tauchrohre (35) einen sich kontinuierlich erweiternden Querschnitt aufweisen und in deren Austrittsbereich (45) über den Umfang verteilt Umlenkschaufeln (47) angeordnet sind, mittels derer die umfangs- und meridianmäßig verzögerte Tauchrohrinnenströmung entdrallbar ist.

3. Wirbelkammerabscheider nach Anspruch 2, dadurch gekennzeichnet, daß die Tauchrohre (35) konisch oder trompetenartig ausgebildet sind.

4. Wirbelkammerabscheider nach Anspruch 2, dadurch gekennzeichnet, daß die Tauchrohre (35) vom Eintrittsabschnitt (36) zum Austrittsabschnitt (37) in der Koaxialebene eine progressiv zunehmende Wandkrümmung aufweisen.

5. Wirbelkammerabscheider nach einem der Ansprüche 2 bis 4, dadurch gekennzeichnet, daß in den Tauchrohren (35) ein Tauchrohrkern oder Diffusorinnenkörper (38) angeordnet ist.

6. Wirbelkammerabscheider nach Anspruch 5, dadurch gekennzeichnet, daß durch den Diffusorinnenkörper (38) im Tauchrohr (35) ein Ringspaltdralldiffusor (46) ausgebildet ist.

7. Wirbelkammerabscheider nach einem der Ansprüche 5 und 6, dadurch gekennzeichnet, daß am Austrittsabschnitt (37) eines jeden Tauchrohres (35) ein Spiralgehäuse (39, 44) als Dralldiffusor angeordnet ist, in das der Diffusorinnenkörper (38) tangential einmündet.

8. Wirbelkammerabscheider nach Anspruch 7, dadurch gekennzeichnet, daß im Bereich der Einlaßöffnungen (40) der Tauchrohre (35) die Diffusorinnenkörper (38) mittels eines Leitkörpers (41) einstückig ausgebildet sind, an dem radial ein Wulst (42) mit den Tauchrohren (35) zugeordneten Strömungsleitflächen (43) angeordnet ist.

9. Wirbelkammerabscheider nach Anspruch 7, dadurch gekennzeichnet, daß das Spiralgehäuse (39, 44) sich in Strömungsrichtung diffusorartig erweiternd ausgebildet ist.

10. Wirbelkammerabscheider nach einem der Ansprüche 2 bis 9, dadurch gekennzeichnet, daß vor dem Hauptströmungseintritt (51) des Wirbelkammerabscheidergehäuses (52) ein Vorabscheiderkanal (49) mit gegebenenfalls einem in Strömungsrichtung sich kontinuierlich verringernden Querschnitt angeordnet ist.

11. Wirbelkammerabscheider nach Anspruch 10, dadurch gekennzeichnet, daß der Vorabscheiderkanal (49) einen rechteckigen Querschnitt mit einer der Höhe der Wirbelkammer (50) entsprechenden Höhe aufweist und spiralförmig um die Wirbelkammer (50) geführt ist.

12. Wirbelkammerabscheider nach Anspruch 10, dadurch gekennzeichnet, daß im Bereich der für die Hauptströmung konkaven Eckenströmungszone in dem Mantel (53) des Vorabscheiderkanals (49) Austragsspalte (78) als Austragsöffnungen für Feststoffe ausgebildet sind.

13. Wirbelkammerabscheider nach einem der Ansprüche 2 bis 12, dadurch gekennzeichnet, daß in dem Wirbelkammerabscheidergehäuse (52) den Wirbel (54) umgebend ein Verteilergehäuse (55) mit mindestens einem dem Wirbel (54) zugeordneten sich über die Wirbelhöhe erstreckenden tangentialen Eintrittsspalt (56) ausgebildet ist.

14. Wirbelkammerabscheider nach Anspruch 13, dadurch gekennzeichnet, daß das Verteilergehäuse (55) aus allgemein kreisförmig angeordneten den Wirbel (54) umgebenden Strömungsleitlamellen (57) besteht, die zueinander jeweils versetzt unter Ausbildung eines Eintrittsspalts (56) angeordnet sind.

15. Wirbelkammerabscheider nach Anspruch 14, dadurch gekennzeichnet, daß die Strömungsleitlamellen (57) spiralig, gegebenenfalls logarithmisch spiralig, gekrümmt sind.

16. Wirbelkammerabscheider nach Anspruch 14, dadurch gekennzeichnet, daß die Strömungsleitlamellen (57) als kreisbogenförmige Zylindersegmentstücke ausgebildet sind.

17. Wirbelkammerabscheider nach Anspruch 16, dadurch gekennzeichnet, daß die kreisbogenförmigen Zylindersegmentstücke so ausgerichtet sind, daß die durch die Eintrittsspalte (56) geführten Teilströme spiralig oder logarithmisch spiralig geführt sind.

18. Wirbelkammerabscheider nach einem der Ansprüche 12 bis 17, dadurch gekennzeichnet, daß in radialer Richtung zur Mittelachse (58) des Wirbels (54) diesen umgebend mehrere kreisförmige Leitschaufelkränze (59) mit unterschiedlichen Bezugsradien und gleichmäßig verteilten gekrümmten Strömungsleitlamellen (57) angeordnet sind.

19. Wirbelkammerabscheider nach einem der Ansprüche 2 bis 18, dadurch gekennzeichnet, daß bei Ausbildung mehrerer Wirbelkammern (50) zu Kompaktanordnungen im Bereich von Strömungsumlenkungen des Hauptgasstroms (60) gekrümmte Leitbleche (61) bzw. Leitprofile (62) mit Dickenverteilung angeordnet sind.

20. Wirbelkammerabscheider nach Anspruch 19, dadurch gekennzeichnet, daß zur Ausbildung einer wellenförmigen Reihenschaltung (68) gleicher Wirbelkammern (50) der Hauptströmungskanal (69) von der jeweiligen Wirbelkammer (50) durch ein Leitblech (61) bzw. Leitprofil (62) distanziert ist.

21. Wirbelkammerabscheider nach einem der Ansprüche 2 bis 20, dadurch gekennzeichnet, daß an den zu den örtlichen Primärströmungszonen konkav gekrümmten Eckenzonen in den ebenen Gehäuseböden (86) des Wirbelkammerabscheidergehäuses (52) und Verteilergehäuses (55) Austragsspalte (78) für Feststoffe ausgebildet sind.

22. Wirbelkammerabscheider nach einem der Ansprüche 18 bis 21, dadurch gekennzeichnet, daß bei Anordnung von Wirbelkammern (50) in dem Gehäuse (79) eines Staubbunkers (80) in diesem eine Bunkerabsaugeinrichtung (81) ausgebildet ist, deren Strömungsausgang (82) unter Ausbildung einer Teilumlaufströmung mit dem Gesamtrohgaseintrittskanal (83) verbunden ist.

## Claims

1. Method for the separation and/or precipitation of solid and/or liquid particles (disperse phase) from gaseous and/or liquid media (continuous phase) and for the separation of mixed gases (separation of gas from gas) and/or mixed fluids (separation of fluid from fluid), and also for sifting and/or classifying with a vortex chamber precipitator, in which precipitator a centrifugal force field is created, from which the specifically lighter portion is withdrawn through two immersion tubes within the central area of the vortex chamber precipitator, which tubes extend into the vortex chamber precipitator co-axially and symmetrically with regard to their central planes, characterised in that during the introduction of rotary impulsion the contact zone between the main flow and the vortex is so closely adjusted to the fixed bounding cylinder jacket wall that the tangential input impulse into the bottom flow is increased as a result of reduction in the impulse portion of the bottom flow, which produces secondary circulation in the vortex chamber; that the bottom flow develops, owing to symmetry of rotation, a constant or almost constant average main flow velocity; that the lateral flow of the vortex in the vortex chamber and the main flow in the main flow channel are directed in such a concave curve to meet at the common boundary edge that the vertical secondary velocities on both sides of the boundary edge proceed in the same direction and are, locally, equally great; that the flow of clean gas passed through the immersion tubes is so directed that in zones of extremely high velocity the flow is diverted only slightly from the circumferential, and that the clean gas flow is directed along the outer walls of the immersion tubes with increasing velocity at the inlet zones, whereby a circular flow is produced in the immersion tubes, which flow, after being diverted through guide vanes, is converted in the outflow zone into an effluent with low velocity at the outlet.

2. Vortex chamber precipitator for carrying out the method according to Claim 1, with at least one vortex chamber (50) with generally cylindrically curving walls and a sharp stream boundary edge (66) at the inlet of the main flow channel (69) into the vortex chamber (50), and with two immersion tubes (35) in the vortex chamber (50), which are arranged mutually co-axially and parallel to the boundary edge (66), which extend towards each other from the end walls of said chamber, and which are connected with a clean gas outlet and have widening exit mouths, whereby the casing (90) of the main flow channel (6)* is spirally curved and the wall that leads from the boundary edge (66) of the main flow channel (69) has a concave cylindrical form, the crude gas inlet (87) is formed on the external casing wall of the vortex chamber (50), being set tangentially to the bottom of the main flow channel (90), the immersion tubes (35) have a progressively widening cross-section and, in their outflow zone (45), vanes (47) for diverting the flow are distributed over their surface area, by means of which the flow within the immersion tubes, slowed down with respect to both boundary and circumferential flow, can be deprived of its rotational velocity.

3. Vortex chamber precipitator according to Claim 2, characterised in that the immersion tubes (35) are conical or trumpet-shaped.

4. Vortex chamber precipitator according to Claim 2, characterised in that the immersion tubes (35) have a progressively increasing curvature of their walls from the inlet zone (36) to the outlet zone (37) in the co-axial plane.

5. Vortex chamber precipitator according to one of Claims 2 to 4, characterised in that in the immersion tubes (35) there is an immersion tube core or internal diffusing body (38).

6. Vortex chamber precipitator according to Claim 5, characterised in that by means of the internal diffusing body (38) in the immersion tube (35) an annular rotation diffuser (46) is formed.

7. Vortex chamber precipitator according to one of Claims 5 and 6, characterised in that in the outlet zone (37) of each immersion tube (35) a spiral casing (39, 44) is provided as a rotation diffuser, into which the internal diffusing body (38) runs tangentially.

8. Vortex chamber precipitator according to Claim 7, characterised in that in the region of the inlet openings (40) of the immersion tubes (35) the internal diffusing bodies (38) are joined into one piece by means of a flow body (41), on which there is a radial projection (42) with surfaces (43) for guiding the flow, respectively to the immersion tubes (35).

9. Vortex chamber precipitator according to Claim 7, characterised in that the spiral casing (39, 44) widens out like a diffuser in the direction of the flow.

10. Vortex chamber precipitator according to one of Claims 2 to 9, characterised in that there is, upstream of the main flow inlet (51) of the casing (52) of the vortex chamber precipitator, a pre-precipitation channel (49) with, if need be, a continuously diminishing cross-section in the direction of the flow.

11. Vortex chamber precipitator according to Claim 10, characterised in that the pre-precipitation channel (49) has a rectangular cross-section with a height corresponding to the height of the vortex chamber (50) and runs around the vortex chamber (50) in spiral form.

12. Vortex chamber precipitator according to Claim 10, characterised in that outlet apertures (78) are formed as discharge openings for solid matter in the region of the concave corner flow zone of the main flow in the jacket (53) of the pre-precipitation channel (49).

13. Vortex chamber precipitator according to one of Claims 2 to 12, characterised in that in the casing (52) of the vortex chamber precipitator, and surrounding the vortex (54), there is a distributor casing (55) with at least one tangential entry aperture (56) to the vortex (54) extending over the height of the vortex.

14. Vortex chamber precipitator according to Claim 13, characterised in that the distributor casing (55) consists of generally circular-form blades (57) for directing the flow, which blades surround the vortex (54) and are all displaced with regard to one another to form each with the next an inlet aperture (56).

15. Vortex chamber precipitator according to Claim 14, characterised in that the flow-directing blades (57) are curved spirally, if need be in logarithmic spirals.

16. Vortex chamber precipitator according to Claim 14, characterised in that the flow-directing blades (57) are formed as cylinder segments shaped like arcs of a circle.

17. Vortex chamber precipitator according to Claim 16, characterised in that the cylinder segments shaped like arcs of a circle are arranged such that the partial flows conveyed through the inlet apertures (56) are directed spirally or in logarithmic spirals.

18. Vortex chamber precipitator according to one of Claims 12 to 17, characterised in that in radial array with respect to the central axis (58) of the vortex (54), and surrounding said vortex, several circular groupings (59) of guide vanes are arranged, which groupings have differing radii in relation to one another whilst the guide vanes themselves take the form of evenly distributed curved blades (57) for directing the flow.

19. Vortex chamber precipitator according to one of Claims 2 to 18, characterised in that in a compact arrangement of several vortex chambers (50) there are curved deflectors (61) or deflecting profiles (62) closely distributed at the regions of diversion of the main gas flow (60).

20. Vortex chamber precipitator according to Claim 19, characterised in that to form a wave-like series connector (68) of similar vortex chambers (50) the main flow channel (69) is distanced from the respective vortex chamber (50) by means of a deflector (61) or deflecting profile (62).

21. Vortex chamber precipitator according to one of Claims 2 to 20, characterised in that outlet apertures (78) for solid matter are formed in the corner zones in the flat casing bottoms (86) of the casing (52) of the vortex chamber precipitator and of the distributor casing (55), such corner zones being curved concavely towards the local primary flow zones.

22. Vortex chamber precipitator according to one of Claims 18 to 21, characterised in that with an arrangement of vortex chambers (50) provided in the casing (79) of a dust bunker (80) an apparatus (81) for withdrawing matter from said bunker is provided, the flow outlet (82) of which is connected with partial recirculation of flow to the common crude gas inlet channel (83).

## Revendications

1. Procédé pour séparer, isoler et/ou extraire des particules solides et/ou fluides (disperse phase) d'un milieu gazeux et/ou fluide (phase continue), ainsi que pour séparer des gaz mélangés (séparation gaz/gaz) et/ou des mélanges liquides (séparation de liquides/liquides), ainsi que pour coucher et/ou classer ceux-ci au moyen d'un séparateur à turbulence, dans lequel est créé un champ centrifuge, dans lequel la fraction spécifiquement plus légère est aspirée par deux tubes plongeurs s'abaissant à l'intérieur de la chambre, coaxialement et symétriquement de part et d'autre du plan central de celle-ci, caractérisé en ce que, dans la ligne d'impulsions de rotation, la zone de contact entre le courant principal et le tourbillon est réglé, par rapport à la limite fixe de l'enveloppe cylindrique de façon que l'impulsion d'entrée tangentielle soit amplifiée dans le courant pelliculaire du fond par la partie secondaire de la fraction pulsée du courant de ladite couche de fond, en ce que le courant de la couche de fond est formé symétrique en rotation à une vitesse constante ou prèsque constante du courant principal, en ce que le courant de la couche de paroi du tourbillon dans la chambre de turbulence et le courant principal dans le conal de circulation principal sont amenés vers le bord d'écoulement avec une telle courbure concave que les vitesses secondaires verticales de part et d'autre du bord d'écoulement sont orienté dans le même sens et ont localement la même grandeur, que le courant de gaz pur est dirigé par les tubes plongeurs de telle manière que, dans les zones où la vitesse d'écoulement est maximale, lecourant n'est affecté que par de faibles changements de direction méridians et que le courant de gaz pur est guidé le long de la paroi extérieure des tubes plongeurs vers les sections d'entrée avec une vitesse croissante, ce qui fait que, dans les tubes plongeurs, est engendré un écoulement annulaire qui, dans la zone de sorte du tube plongeur, après déviation, par des aubes de guidage est transformé , à la sortie, en un courant de source à faible vitesse d'écoulement.

2. Séparateur cyclone ou à chambre à turbulence pour la mise en oeuvre du procédé spécifie dans la revendication 1, qui comprend, au moins une chambre à turbulence (50) dont la paroi présence une courbure pratiquement cylindrique avec une bord d'écoulement vif (66) à l'entrée du canal de circulation ou d'écoulement principal (69) dans la chambre de turbulence (50) et respectivement deux tubes plongeurs (35), montés mutuellement coaxiaux et parallèles au bord d'écoulement (66) dans la chambre de turbulence (50), qui s'étendent respectivement, de leurs parois d'extrémité, l'un vers l'autre et sont en communication avec une sortie de gaz pur et présentent une sortie qui s'élargit, cependant que l'enveloppe (90) du canal principal (6) présente une courbure en spirale tandis que la paroi dirigée vers le bord 'écoulement (66) du canal principal (69) présent une forme cylindrique concave, l'entrée de gaz brut (87) s'étendant tangentiellement au fond (90) du canal d'écoulement princpal à la paroi d'enveloppe extérieure de la chambre de turbulence (50), cependant que les tubes plongeurs présentent une section s'élargissant en continu et comportent à la sortie (45) des aubes de déflexion (47) réparties le long du pourtour, au moyen desquels le courant interne, différé circonférentiellement des tubes plongeurs peut être redressé.

3. Séparateur cyclone selon la revendication 2, caractérisé en ce que les tubes plongeurs (35) ont une forme conique ou en trompette.

4. Séparateur cyclone selon la revendication 2, caractérisé en ce que les tubes plongeurs, de la section d'entrée (36) à la section de sortie (37) dans le plan coaxial,presentent une courbure de paroi qui croît progressivement.

5. Séparateur cyclone selon l'une quelconque des revendications 2 à 4, caractérisé en ce que dans les tubes plongeurs (35) est monté un noyau ou un élément interne (38) faisant fonction de diffuseur.

6. Séparateur cyclone selon la revendication 5, caractérise en ce que dans le tube plongeur (36) l'élément diffuseur intérieur (38) forme un diffuseur giratoire à fente annulaire (46).

7. Séparateur cyclone selon l'une quelconque des deux revendications 5 et 6, caractérisé en ce que la section de sortie (37) de chaque tube plongeur (35) présente une enveloppe en forme de spirale (39, 44) faisant fonction de diffuseur giratoire, dans lequel l'élément interne (38) du diffuseur débouche tangentiellement.

8. Séparateur cyclone selon la revendication 7, caractérisé en ce que dans la région des tubes plongeurs (35), l'élément intérieur (38) du diffuseur présente radialement un guide (41) sur lequel est monté radialement un bourrelet (42) au moyen duquel des surface de guidage (43) associées aux tubes plongeurs (35) sont fixées.

9. Séparateur cyclone selon la revendication 7, caractériksé en ce que l'enveloppe en forme d'hélice (39, 44) s'évase en forme de diffuseur dans le sens de l'écoulement.

10. Séparateur cyclone selon l'une quelconque des revendications 2 à 9, caractérisé en ce que, en amont de l'entrée (51) du courant principal de l'enveloppe (52) du séparateur cyclone est prévu un canal de preséparation (49) qui présente, éventuellement, une section qui diminue en continu dans la direction de circulation du courant.

11. Séparateur cyclone selon la revendication 10, caractérisé en ce que le canal de préséparation (49) présente une section rectangulaire dont la hauteur correspond à celle de la chambre de turbulence (50) et qui s'enroule en spirale autour de la chambre de turbulence (50).

12. Séparateur cyclone selon la revendication 10, caractérise en ce que, dans la région du canal de préséparation (49) , la zone de circulation angulaire concave présente, dans l'enveloppe (53) du canal de préséparation (49), des fentes d'évacuation (78) faisant fonction d'orifices de sortie des matières solides.

13. Séparateur cyclone selon l'une quelconque des revendications 2 à 12, caractérisé en ce que dans l'enveloppe (52) du séparateur cyclone présente une enveloppe de distributeur (52) entourant le tourbillon (54) présente une fente d'entrée tangentielle (56) s'étendant sur toute la hauteur du tourbillon (54) et qui coopère avec lui.

14. Séparateur cyclone selon la revendication 13, caractérisé en ce que l'enveloppe (55) du distributeur se compmose de lamelles directrices (57) montée pratiquement en cercle qui entoure le tourbillon (54) et qui sont décalées entre elles de façon à produire une fente d'entrée (56).

15. Séparateur cycone selon la revendication 14, caractérisé en ce que les lamelles directrices (57) présentent une courbure en spirale, le cas échéant en spirale logarithmique.

16. Séparateur cyclone selon la revendication 14, caractérisé en ce que les lamelles directrices (57) présente en forme de segments d'arc de cercle.

17. Séparateur cyclone selon la revendication 16, caractérisé an ce que lesdits segments de cylindre en forme d'arcs de cercle sont orientés de façon à imposer aux curants parties traversant la fente d'entrée (56) un écoulement en spirale normale ou logarithmique.

18. Séparateur cyclone selon l'une quelconque des revendications 12 à 17, caractérisé en ce que dans une direction radiale par rapport à l'axe central (58) du tourbillon (54) ont montés, de façon à entourer celui-ci, un certain nombre de couronnes d'aubes directrices incurvées (59), uniformément distribuées, présentant différents rayons de référence.

19. Séparateur cyclone selon l'une quelconque des revendications 2 à 18, caractérisé en ce que lors de la formation de plusieurs chambres de turbulence (50) en arrangements compacts, on monte dans la région de la déviation de la direction des courants composant le courant principal (60) des déflecteurs incurvés (61) ou des guides profilés (62) dont l'épaisseur est variable.

20. Séparateur cyclone selon la revendication 19, caractérisé en ce que pour produire un montage en série ondulé (68) d'un certain nombre de chambles de turbulence (60) identiques, le canal de circulation principal (69) est espacé de la chambre de turbulence correspondante (50) par un déflecteur (61) ou par un guide profilé (62).

21. Séparateur cylone selon l'une quelconque des revendications 2 à 20, caractérisé en ce queaux zones angulaires concaves des zones d'écoulement primaires, il est prévu, dans les fons plans (86) ce l'enveloppe (52) de la chambre de turbulence et dans l'enveloppe (55) du distributeur, des tentes de sortie (78) pour évacuer les matières solices.

22. Séparateur cyclone selon l'une quelconque des revendications 18 à 21, caractérisé en ce que, dans le cas où les chambres de turbulence (50) sont installées dans l'enveloppe (79) d'un caisson à poussière (80), celui-ci comporte une installation d'aspiration (81) dont l'orifice d'aspiration (82) est relié, par un circuit de dérivation avec le canal de sortie de gaz général (83).
